# EUROPEAN PATENT APPLICATION

(11) **EP 4 842 059 A1**
(43) Date of publication of application: **18.11.2026**
(21) Application number: 25751632.8
(22) Date of filing: 07.02.2025
(51) Int. Cl.: H04W 36/00

(54) **PRIMARY SECONDARY CELL ADJUSTMENT METHOD, DEVICE, AND STORAGE MEDIUM**

(30) Priority: 08.02.2024 CN 202410178286
(71) Applicant: Honor Device Co., Ltd., Shenzhen, Guangdong 518040 (CN)
(72) Inventor: ZHENG, Xiaoxiao, Shenzhen, Guangdong 518040 (CN)
(74) Representative: Gill Jennings & Every LLP
(86) International application number: PCT/CN2025/076121
(87) International publication number: WO 2025/168033

(57) **Abstract**

Embodiments of this application provide a primary secondary cell adjustment method, a device, and a storage medium, and relate to the field of communication technologies. A network device pre-configures, for a terminal device, configuration information corresponding to a candidate PScell, where the configuration information includes configuration information for L1 measurement and/or configuration information for performing UL/DL synchronization in advance. Based on the configuration information, the terminal device implements a conditional PScell addition or change mechanism based on the L1 measurement and/or the UL/DL synchronization performed in advance, to improve efficiency of PScell addition or change, and reduce adverse impact of PScell addition or change on a communication service.

## Description

This application claims priority to Chinese Patent Application No. 202410178286.6, filed with the China National Intellectual Property Administration on February 8, 2024 and entitled "PRIMARY SECONDARY CELL ADJUSTMENT METHOD, DEVICE, AND STORAGE MEDIUM", which is incorporated herein by reference in its entirety.

### TECHNICAL FIELD

This application relates to the field of communication technologies, and in particular, to a primary secondary cell adjustment method, a device, and a storage medium.

### BACKGROUND

When quality of service of a serving cell is poor, there is a neighboring cell with better quality of service, or cell load balancing needs to be performed, a terminal in a connected state (RRC_connected) may trigger a cell handover, to be handed over from the serving cell to a target cell.

For a dual connectivity (dual connectivity, DC) scenario, a conditional primary secondary cell (primary secondary cell, PScell) addition or change (conditional PScell addition/change, CPAC) mechanism is introduced in a communication protocol, so that a primary cell (primary cell, Pcell) handover, PScell addition, and PScell change (namely, a PScell handover) need to be considered in the DC scenario. In CPCA, layer 3 (layer 3, L3)-based measurement can be performed on a candidate cell. Based on a measurement result and a trigger condition of the candidate cell, a random access is initiated to a target cell that meets a requirement.

However, efficiency of PScell addition or change in the foregoing manner is low. Particularly, when a terminal is in a fast fading channel, a cell handover may be delayed, which brings adverse impact such as radio link disconnection, data transmission interruption, and severe rate degradation.

### SUMMARY

Embodiments of this application provide a primary secondary cell adjustment method, a device, and a storage medium, which are applied to the field of communication technologies, and improve efficiency of PScell addition or change through L1 measurement and/or by performing UL/DL synchronization in advance.

According to a first aspect, an embodiment of this application provides a primary secondary cell adjustment method. The method includes: indicating first information. The first information indicates first configuration information corresponding to a candidate PScell, the first configuration information is used in conditional PScell addition or change, and the first configuration information includes second configuration information for L1 measurement and/or third configuration information for performing uplink UL/downlink DL synchronization in advance. In this embodiment, a network device pre-configures the first configuration information corresponding to the candidate PScell for a terminal device, and the terminal device may, based on the first configuration information, improve efficiency of PScell addition or change through L1 measurement and/or by performing the UL/DL in advance during a conditional PScell addition or change process for the candidate PScell.

In an optional embodiment of the first aspect, the second configuration information includes resource configuration information for the L1 measurement and/or result processing configuration information for L1 measurement result processing. The resource configuration information includes time-frequency resource information of a measurement object related to CSI and/or an SSB. In this embodiment, the network device pre-configures, for the terminal device, the resource configuration information for L1 measurement and/or the result processing configuration information for L1 measurement result processing, so that during conditional PScell addition or change, the terminal device may perform the L1 measurement based on the resource configuration information, and/or perform L1 measurement result processing based on the result processing configuration information, to improve efficiency of PScell addition or change based on L1 measurement. In addition, two optional schemes for the resource configuration information for L1 measurement are provided.

In an optional embodiment of the first aspect, the result processing configuration information includes: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger performing the UL/DL synchronization in advance. In this embodiment, the L1 measurement-based measurement result reporting and/or the candidate PScell addition or change are/is triggered by using the first decision condition and the first measurement event, and/or performing the UL/DL synchronization in advance is triggered by using the second decision condition and the second measurement event. In this way, the L1 measurement-based measurement result reporting, candidate PScell addition or change, and/or performing the UL/DL synchronization in advance are performed in a timely manner during conditional PScell addition or change, thereby improving efficiency of PScell addition or change.

In an optional embodiment of the first aspect, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value. In this embodiment, a plurality of optional solutions of the first measurement event and the second measurement event are provided.

In an optional embodiment of the first aspect, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event. In this embodiment, a plurality of optional solutions of the first decision condition and the second decision condition are provided.

In an optional embodiment of the first aspect, the first configuration information includes one or more of the following: the first time window, the second time window, a measurement interval between N measurements, a measurement interval between M measurements, and a measurement interval between adjacent measurements. The network device may configure the first time window, the second time window, the measurement interval between N measurements, the measurement interval between M measurements, and the measurement interval between adjacent measurements by using the first configuration information.

In an optional embodiment of the first aspect, the result processing configuration information further includes one or more of the following: a cell identifier, a quantity of measured beams, the measurement object related to the CSI and/or the SSB, a measurement type, and an L1 measurement interval. In this embodiment, in addition to the decision condition and the measurement event for triggering an operation, another optional content included in the result processing configuration information is provided.

In an optional embodiment of the first aspect, the measurement type includes one or more of the following: RSRP, RSRQ, and an SINR. In this embodiment, the L1 measurement may be measuring one or more of RSRP, RSRQ, and an SINR of a cell, and these measurement types reflect quality of service of the cell, so as to select a cell with better quality of service during PScell addition or change.

In an optional embodiment of the first aspect, the method further includes: obtaining second information, where the second information is used to request to perform the UL/DL synchronization on the candidate PScell in advance; and indicating third information, where the third information indicates a PSS, an SSS, and PBCH information that correspond the candidate PScell, the PSS, the SSS, and the PBCH information are used for DL synchronization, and/or the third information indicates TA timing information corresponding to the candidate PScell, and the TA timing information is used for UL synchronization. In this embodiment, after the network device configures the first configuration information for the terminal device, the terminal device may request, from the network device by using the second information, to perform the UL/DL synchronization on the candidate PScell, and the network device indicates, to the terminal device by using the third information, related information used for UL/DL synchronization of the candidate PScell, so as to perform the UL/DL synchronization on the candidate PScell in advance.

In an optional embodiment of the first aspect, when the third information indicates the TA timing information corresponding to the candidate PScell, the second information is used to initiate a PRACH access of the candidate PScell. Alternatively, when the third information indicates the PSS, the SSS, and the PBCH information corresponding to the candidate PScell, the second information is used to request to read an SSB of the candidate PScell. In this embodiment, the terminal device may obtain the TA timing information by initiating the PRACH access of the candidate PScell, or may obtain the PSS, SSS, and PBCH information corresponding to the candidate PScell by requesting to read the SSB of the candidate PScell.

According to a second aspect, an embodiment of this application provides a primary secondary cell adjustment method. The method includes: obtaining first information, where the first information indicates first configuration information corresponding to a candidate PScell, and the first configuration information includes second configuration information for L1 measurement and/or third configuration information for performing UL/DL synchronization in advance; and performing conditional PScell addition or change on the candidate PScell based on the first configuration information. In this embodiment, a network device pre-configures the first configuration information corresponding to the candidate PScell for a terminal device, and the terminal device may, based on the first configuration information, improve efficiency of PScell addition or change through L1 measurement and/or by performing the UL/DL in advance during a conditional PScell addition or change process for the candidate PScell.

In an optional embodiment of the second aspect, the second configuration information includes resource configuration information for the L1 measurement and/or result processing configuration information for an L1 measurement result. The resource configuration information includes time-frequency resource information of a measurement object related to CSI and/or an SSB. In this embodiment, the network device pre-configures, for the terminal device, the resource configuration information for L1 measurement and/or the result processing configuration information for L1 measurement result processing, so that during conditional PScell addition or change, the terminal device may perform the L1 measurement based on the resource configuration information, and perform L1 measurement result processing based on the result processing configuration information, to improve efficiency of PScell addition or change based on L1 measurement. In addition, two optional schemes for the resource configuration information for L1 measurement are provided.

In an optional embodiment of the second aspect, the result processing configuration information includes: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger performing UL/DL synchronization in advance. In this embodiment, the L1 measurement-based measurement result reporting and/or the candidate PScell addition or change are/is triggered by using the first decision condition and the first measurement event, and/or performing UL/DL synchronization in advance is triggered by using the second decision condition and the second measurement event. In this way, the L1 measurement-based measurement result reporting, candidate PScell addition or change, and/or performing UL/DL synchronization in advance are performed in a timely manner during conditional PScell addition or change, thereby improving efficiency of PScell addition or change.

In an optional embodiment of the second aspect, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value. In this embodiment, a plurality of optional solutions of the first measurement event and the second measurement event are provided.

In an optional embodiment of the second aspect, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event. In this embodiment, a plurality of optional solutions of the first decision condition and the second decision condition are provided.

In an optional embodiment of the second aspect, the first configuration information includes one or more of the following: the first time window, the second time window, a measurement interval between N measurements, a measurement interval between M measurements, and a measurement interval between adjacent measurements. The network device may configure the first time window, the second time window, the measurement interval between N measurements, the measurement interval between M measurements, and the measurement interval between adjacent measurements by using the first configuration information.

In an optional embodiment of the second aspect, the result processing configuration information further includes one or more of the following: a cell identifier, a quantity of measured beams, the measurement object related to the CSI/SSB, a measurement type, and an L1 measurement interval. In this embodiment, in addition to the decision condition and the measurement event for triggering an operation, another optional content included in the result processing configuration information is provided.

In an optional embodiment of the second aspect, the measurement type includes one or more of the following: RSRP, RSRQ, and an SINR. In this embodiment, the L1 measurement may be measuring one or more of RSRP, RSRQ, and an SINR of a cell, and these measurement types reflect quality of service of the cell, so as to select a cell with better quality of service during PScell addition or change.

In an optional embodiment of the second aspect, performing the conditional PScell addition or change on the candidate PScell based on the first configuration information includes: adding or changing to the candidate PScell if the measurement result of the candidate PScell meets the first decision condition. In this embodiment, based on the first decision condition, the terminal device is enabled to add or change to a better PScell. L1 measurement improves efficiency of determining whether the measurement result of the candidate PScell meets the first decision condition, and improves efficiency of PScell addition or change.

In an optional embodiment of the second aspect, adding or changing to the candidate PScell if the measurement result of the candidate PScell meets the first decision condition includes: sending fourth information if the measurement result of the candidate PScell meets the first decision condition, where the fourth information is used to report the measurement result of the candidate PScell; obtaining fifth information, where the fifth information indicates to add or change to the candidate PScell; and adding or changing to the candidate PScell. In this embodiment, when the measurement result of the candidate PScell meets the first decision condition, the terminal device is triggered to report the measurement result of the candidate PScell, and the network device indicates, based on the report of the terminal device, the terminal device to perform candidate PScell addition or change.

In an optional embodiment of the second aspect, adding or changing to the candidate PScell if the measurement result of the candidate PScell meets the first decision condition includes: performing random access to the candidate PScell if the measurement result of the candidate PScell meets the first decision condition. In this embodiment, when the measurement result of the candidate PScell meets the first decision condition, the terminal device actively performs candidate PScell addition or change.

In an optional embodiment of the second aspect, performing the conditional PScell addition or change on the candidate PScell based on the first configuration information includes: performing UL/DL synchronization on the candidate PScell in advance based on the third configuration information if the measurement result of the candidate PScell meets the second decision condition, to obtain synchronization information; and performing candidate PScell addition or change based on the synchronization information if it is determined to perform the candidate PScell addition or change. In this embodiment, UL/DL synchronization is performed in advance to improve efficiency of candidate PScell addition or change.

In an optional embodiment of the second aspect, performing the UL/DL synchronization on the candidate PScell in advance based on the third configuration information to obtain the synchronization information includes: sending second information, where the second information is used to request to perform the UL/DL synchronization on the candidate PScell in advance; and obtaining third information, where the third information indicates a PSS, an SSS, and PBCH information that correspond the candidate PScell, the PSS, the SSS, and the PBCH information are used for DL synchronization, and/or the third information indicates TA timing information corresponding to the candidate PScell, and the TA timing information is used for UL synchronization. In this embodiment, the terminal device requests, from the network device, to perform UL/DL synchronization on the candidate PScell, and the network device indicates, to the terminal device, related information used for UL/DL synchronization of the candidate PScell, so as to perform UL/DL synchronization on the candidate PScell in advance.

In an optional embodiment of the second aspect, when the third information indicates the TA timing information, the second information is used to initiate a PRACH access of the candidate PScell. Alternatively, when the third information indicates the PSS, the SSS, and the PBCH information, the second information is used to request to read an SSB of the candidate PScell. In this embodiment, the terminal device may obtain the TA timing information by initiating the PRACH access of the candidate PScell, or may obtain the PSS, SSS, and PBCH information corresponding to the candidate PScell by requesting to read the SSB of the candidate PScell.

In an optional embodiment of the second aspect, the first configuration information further includes a physical uplink control channel PUCCH configuration information indicating PRACH-free access corresponding to the candidate PScell. Performing candidate PScell addition or change based on the synchronization information includes: determining validity of the TA timing information. If the TA timing information is valid, the terminal device communicates with a candidate SN in which the candidate PScell cell is located based on the PUCCH configuration information. If the TA timing information is invalid, the terminal device initiates a PRACH access to the candidate SN. In this embodiment, when the TA timing information is valid, the PRACH access does not need to be initiated, thereby improving efficiency of PScell addition or change.

According to a third aspect, an embodiment of this application provides a network device, including an indication module configured to indicate first information. The first information indicates first configuration information corresponding to a candidate PScell, the first configuration information is used in conditional PScell addition or change, and the first configuration information includes second configuration information for L1 measurement and/or third configuration information for performing uplink UL/downlink DL synchronization in advance.

In an optional embodiment of the third aspect, the second configuration information includes resource configuration information for the L1 measurement and/or result processing configuration information for L1 measurement result processing. The resource configuration information includes time-frequency resource information of a measurement object related to CSI and/or an SSB.

In an optional embodiment of the third aspect, the result processing configuration information includes: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger performing UL/DL synchronization in advance.

In an optional embodiment of the third aspect, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value.

In an optional embodiment of the third aspect, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event.

In an optional embodiment of the third aspect, the first configuration information includes one or more of the following: the first time window, the second time window, a measurement interval between N measurements, a measurement interval between M measurements, and a measurement interval between adjacent measurements. The network device may configure the first time window, the second time window, the measurement interval between N measurements, the measurement interval between M measurements, and the measurement interval between adjacent measurements by using the first configuration information.

In an optional embodiment of the third aspect, the result processing configuration information further includes one or more of the following: a cell identifier, a quantity of measured beams, the measurement object related to the CSI and/or the SSB, a measurement type, and an L1 measurement interval.

In an optional embodiment of the third aspect, the measurement type includes one or more of the following: RSRP, RSRQ, and an SINR.

In an optional embodiment of the third aspect, an obtaining module is further included, and is configured to obtain second information, where the second information is used to request to perform UL/DL synchronization on the candidate PScell in advance. The indication module is further configured to indicate third information. The third information indicates the PSS, SSS, and PBCH information corresponding to the candidate PScell, and the PSS, SSS, and PBCH information are used for DL synchronization; or the third information indicates the TA timing information corresponding to the candidate PScell, and the TA timing information is used for UL synchronization.

In an optional embodiment of the third aspect, when the third information indicates the TA timing information corresponding to the candidate PScell, the second information is used to initiate a PRACH access of the candidate PScell. Alternatively, when the third information indicates the PSS, the SSS, and the PBCH information corresponding to the candidate PScell, the second information is used to request to read an SSB of the candidate PScell.

It should be understood that the technical solutions of the third aspect of this application correspond to the technical solutions of the first aspect of this application, and beneficial effects achieved by the aspects and the corresponding feasible implementations are similar. Details are not described again.

According to a fourth aspect, an embodiment of this application provides a terminal device, including an obtaining module configured to obtain first information. The first information indicates first configuration information corresponding to a candidate PScell, and the first configuration information includes second configuration information for L1 measurement and/or third configuration information for performing UL/DL synchronization in advance. The processing module is configured to perform conditional PScell addition or change on the candidate PScell based on the first configuration information.

In an optional embodiment of the fourth aspect, the second configuration information includes resource configuration information for the L1 measurement and/or result processing configuration information for L1 measurement result processing. The resource configuration information includes time-frequency resource information of a measurement object related to CSI and/or an SSB.

In an optional embodiment of the fourth aspect, the result processing configuration information includes: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger UL/DL synchronization in advance.

In an optional embodiment of the fourth aspect, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value.

In an optional embodiment of the fourth aspect, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event.

In an optional embodiment of the fourth aspect, the first configuration information includes one or more of the following: the first time window, the second time window, a measurement interval between N measurements, a measurement interval between M measurements, and a measurement interval between adjacent measurements. The network device may configure the first time window, the second time window, the measurement interval between N measurements, the measurement interval between M measurements, and the measurement interval between adjacent measurements by using the first configuration information.

In an optional embodiment of the fourth aspect, the result processing configuration information further includes one or more of the following: a cell identifier, a quantity of measured beams, the measurement object related to the CSI/SSB, a measurement type, and an L1 measurement interval.

In an optional embodiment of the fourth aspect, the measurement type includes one or more of the following: RSRP, RSRQ, and an SINR.

In an optional embodiment of the fourth aspect, the processing module is specifically configured to: add or change to the candidate PScell if the measurement result of the candidate PScell meets the first decision condition.

In an optional embodiment of the fourth aspect, the processing module is specifically configured to: send fourth information if the measurement result of the candidate PScell meets the first decision condition, where the fourth information is used to report the measurement result of the candidate PScell; obtain fifth information, where the fifth information indicates to add or change to the candidate PScell; and add or change to the candidate PScell.

In an optional embodiment of the fourth aspect, the processing module is specifically configured to: perform random access to the candidate PScell if the measurement result of the candidate PScell meets the first decision condition.

In an optional embodiment of the fourth aspect, the processing module is specifically configured to: perform UL/DL synchronization on the candidate PScell in advance based on the third configuration information if the measurement result of the candidate PScell meets the second decision condition, to obtain synchronization information; and perform candidate PScell addition or change based on the synchronization information if it is determined to perform the candidate PScell addition or change.

In an optional embodiment of the fourth aspect, send second information, where the second information is used to request to perform the UL/DL synchronization on the candidate PScell in advance; and indicating third information, where the third information indicates a PSS, an SSS, and PBCH information that correspond the candidate PScell, the PSS, the SSS, and the PBCH information are used for DL synchronization, and/or the third information indicates TA timing information corresponding to the candidate PScell, and the TA timing information is used for UL synchronization.

In an optional embodiment of the fourth aspect, when the third information indicates the TA timing information, the second information is used to initiate a PRACH access of the candidate PScell. Alternatively, when the third information indicates the PSS, the SSS, and the PBCH information, the second information is used to request to read an SSB of the candidate PScell.

In an optional embodiment of the fourth aspect, the first configuration information further includes PUCCH configuration information indicating PRACH-free access corresponding to the candidate PScell. The processing module is specifically configured to: determine validity of the TA timing information; and if the TA timing information is valid, communicate with the candidate SN in which the candidate PScell is located based on the PUCCH configuration information; or if the TA timing information is invalid, initiate a PRACH access to the candidate SN.

It should be understood that the technical solutions of the fourth aspect of this application correspond to the technical solutions of the second aspect of this application, and beneficial effects achieved by the aspects and the corresponding feasible implementations are similar. Details are not described again.

According to a fifth aspect, an embodiment of this application provides an electronic device, including a processor and a memory. The memory is configured to store computer-executable instructions, and the processor executes the computer-executable instructions stored in the memory, so that the electronic device performs the method described in any one of the first aspect or the possible implementations of the first aspect, or the electronic device performs the method described in any one of the second aspect or the possible implementations of the second aspect.

According to a sixth aspect, an embodiment of this application provides a computer-readable storage medium. The computer-readable storage medium stores a computer program or instructions, and when the computer program or instructions are executed by a processor, the method described in any one of the first aspect or the possible implementations of the first aspect is implemented; or when the computer program or instructions are executed by the processor, the method described in any one of the second aspect or the possible implementations of the second aspect is implemented.

According to a seventh aspect, this application provides a chip or a chip system. The chip or the chip system includes at least one processor and a communication interface. The communication interface and the at least one processor are interconnected via a line, and the at least one processor is configured to run a computer program or instructions, to perform the method described in the first aspect or any possible implementation of the first aspect, or to perform the method described in the second aspect or any possible implementation of the second aspect. The communication interface in the chip may be an input/output interface, a pin, a circuit, or the like.

In a possible implementation, the chip or the chip system described above in this application further includes at least one memory, and the at least one memory stores instructions. The memory may be a storage unit, for example, a register or a cache, inside the chip, or may be a storage unit (for example, a read-only memory or a random access memory) of the chip.

According to an eighth aspect, an embodiment of this application provides a computer program product, including a computer program. When the computer program is run, a computer is enabled to perform the method described in any one of the first aspect or the possible implementations of the first aspect; or the computer is enabled to perform the method described in any one of the second aspect or the possible implementations of the second aspect.

It should be understood that the technical solutions of the fifth aspect to the eighth aspect of this application correspond to the technical solutions of the first aspect and the second aspect of this application, and beneficial effects achieved by the aspects and the corresponding feasible implementations are similar. Details are not described again.

Embodiments of this application provide a primary secondary cell adjustment method, a device, and a storage medium. A network device configures, for a terminal device, first configuration information corresponding to a candidate PScell, where the first configuration information includes second configuration information for L1 measurement and/or third configuration information for UL/DL synchronization. The terminal device may perform conditional PScell addition or change on the candidate PScell based on the first configuration information, to improve efficiency of PScell addition or change by performing L1 measurement with higher efficiency and/or performing UL/DL synchronization in advance.

### BRIEF DESCRIPTION OF DRAWINGS

FIG. 1A and FIG. 1B are an example diagram of a cell handover procedure;
FIG. 2 is an example diagram of a dual connectivity scenario;
FIG. 3 is an example flowchart in which an MN triggers a CPA;
FIG. 4 is an example flowchart in which an SN triggers a CPC;
FIG. 5 is a diagram of an architecture of a communication system according to an embodiment of this application;
FIG. 6 is a diagram of a primary secondary cell adjustment method according to an embodiment of this application;
FIG. 7 is a diagram of a primary secondary cell adjustment method according to another embodiment of this application;
FIG. 8 is a diagram of a primary secondary cell adjustment method according to another embodiment of this application;
FIG. 9 is a diagram of a primary secondary cell adjustment method according to another embodiment of this application;
FIG. 10 is a diagram of a primary secondary cell adjustment method according to another embodiment of this application;
FIG. 11 is a diagram of a network device according to an embodiment of this application;
FIG. 12 is a diagram of a terminal device according to an embodiment of this application; and
FIG. 13 is a diagram of a structure of an electronic device according to an embodiment of this application.

### DESCRIPTION OF EMBODIMENTS

To clearly describe technical solutions in embodiments of this application, the following briefly describes some terms and technologies in embodiments of this application.

Cell handover: A terminal device migrates a radio link connection from a source cell to a target cell.

For a terminal device in a radio resource control (radio resource control, RRC) connected state (RRC_Connected), a cell handover is triggered when radio link quality of a current serving cell is poor, there is a neighboring cell with better radio link quality, or load balancing between cells needs to be performed.

A cell handover process may include three phases: handover preparation, handover execution, and handover completion.

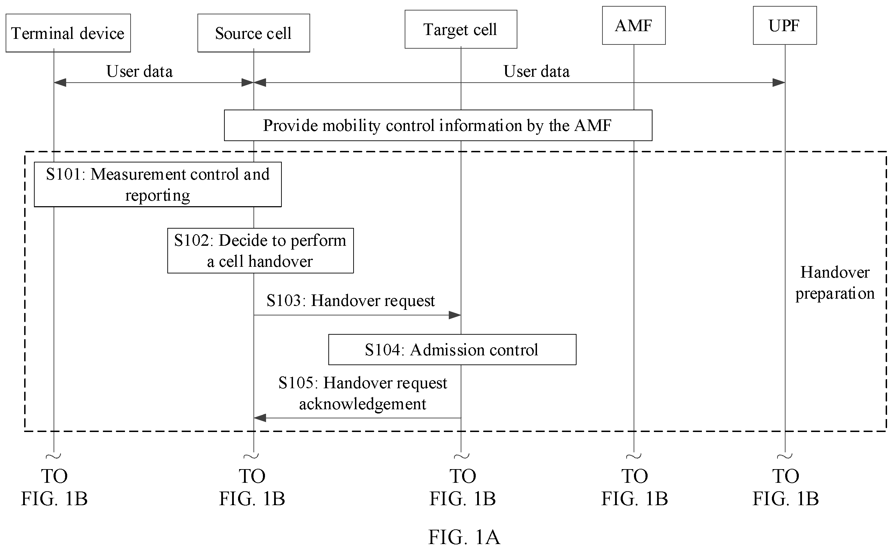

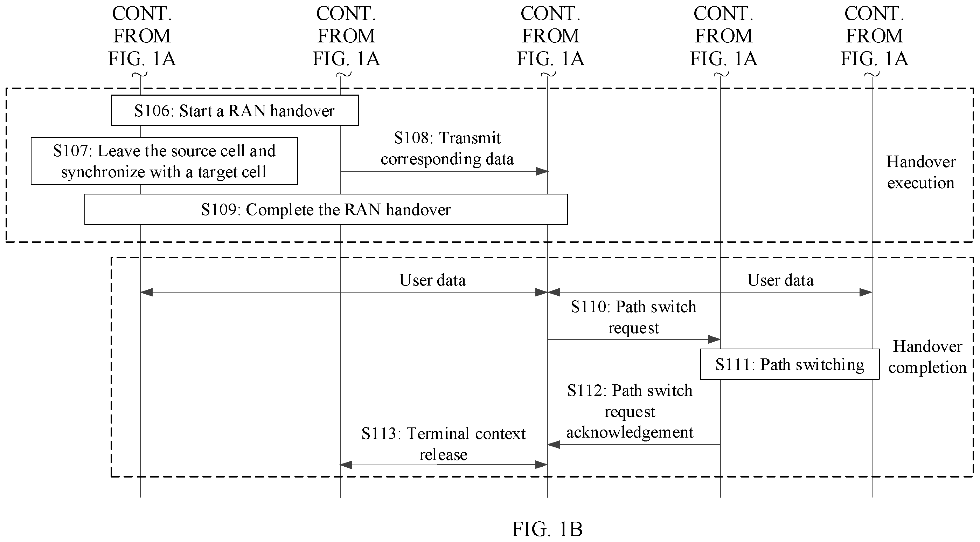

FIG. 1A and FIG. 1B are an example diagram of a cell handover procedure. As shown in FIG. 1A and FIG. 1B, before a handover, user data (user data) related to a terminal device may be transmitted between the terminal device, a source cell, and a user plane function (user plane function, UPF). An access and mobility management function (access and mobility management function, AMF) provides mobility control information (mobility control information), for example, control of access to the terminal device, to the source cell. The cell handover process may include steps S101 to S113. A handover preparation phase includes steps S101 to S105, a handover execution phase includes steps S106 to S109, and a handover completion phase includes steps S110 to S113.

First, in S101, the source cell may send measurement control information to the terminal device, where the measurement control information may include configuration information related to measurement, such as a neighbor cell list for measurement, and may further include a requirement for reporting a measurement report. The terminal device may, based on an indication of the measurement control information, report the measurement report to the source cell. In S102, the source cell makes a cell handover decision based on the measurement report reported by the terminal device, and decides to perform cell handover. In S103, the source cell sends a cell handover request to a target cell. In S104, the target cell may perform admission control to determine whether to allow the terminal device to perform handover access. In S105, if the target cell allows the terminal device to perform handover access, the target cell may send a handover request acknowledgment message to the source cell. In this way, the handover preparation phase in which the terminal device performs cell handover is completed.

After the cell handover preparation, in S106, the source cell and the terminal device may start a radio access network (radio access network, RAN) handover. In S107, the terminal device may leave the source cell and synchronize with the target cell. In S108, the source cell may transmit some data to the target cell. For example, the source cell sends a sequence number (sequence number, SN) status transfer (SN status transfer) message to the target cell, to transmit an uplink/downlink sequence number (Sequence Number) of a packet data convergence protocol (packet data convergence protocol, PDCP) of the terminal device in the source cell to the target cell. For another example, when receiving the user data sent by the UPF, the source cell transmits the user data to the target cell, and the target data buffers the user data. In S109, the terminal completes the RAN handover from the source cell to the target cell. In this way, the handover execution phase in which the terminal device performs cell handover is completed.

During the handover completion phase, because the terminal device has been handed over to the target cell, the user data related to the terminal device may be transmitted between the terminal device, the target cell, and the UPF. In S110, the target cell may send a path switch request (path switch request) message to the AMF, to request a core network to switch a user plane path. In S111, the AMF and the UPF in the core network perform path switching. In S112, after the path switching is completed, the AMF sends a path switching acknowledgment message to the target cell. In S113, the target cell sends a terminal context release message to the source cell, and then the source cell may release context information of the terminal device. In this way, the cell handover is completed.

Dual connectivity (dual connectivity, DC): A terminal device maintains connections with two access network devices or two wireless standards. Based on differentiation between primary and secondary, a primary access network device in the two access network devices is a master node (master node, MN), and the other access network device is a secondary node (secondary node, SN). A plurality of cells corresponding to the MN are a master cell group (master cell group, MCG), and a plurality of cells corresponding to the SN are a secondary cell group (secondary cell group, SCG).

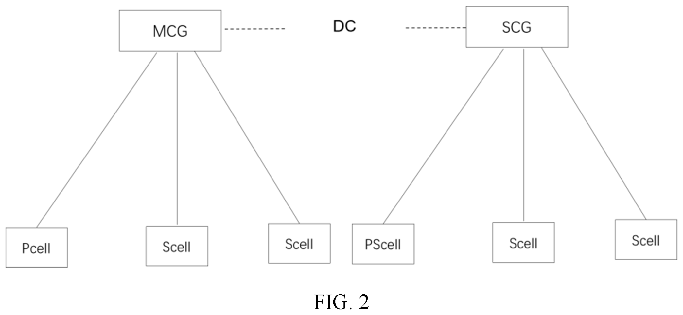

FIG. 2 is an example diagram of a dual connectivity scenario. As shown in FIG. 2, in the DC scenario, a plurality of cells in an MCG include a primary cell (primary cell, PCell) and a plurality of secondary cells (secondary cell, Scell); a plurality of cells in an SCG include a primary secondary cell (primary secondary cell, PScell) and a plurality of Scells. In the DC scenario, a cell handover includes a PCell handover and a PScell change (namely, a PScell handover). In addition, a cell change also involves a PScell addition. This embodiment of this application mainly resolves a problem of PScell addition or change.

Conditional PScell addition/change (conditional pscell addition/change, CPAC): In a DC scenario, pscell addition or change is triggered by a change in a service condition and channel quality.

CPCA may be triggered by an MN or an SN.

For example, the MN triggers CPCA. An access network device in which the MN is located may initiate a CPCA request and a related configuration information request to an access network device in which the SN is located, and the access network device in which the SN is located performs corresponding configuration. The MN configures a plurality of candidate PScells and a trigger condition (the trigger condition is used to trigger PScell addition or change) corresponding to the PScell for a terminal device. The terminal device evaluates the trigger condition, and after evaluating that at least one PScell meets the trigger condition, the terminal device initiates a random access channel (random access channel, RACH) to the PScell that is determined to be added or changed, to complete CPAC.

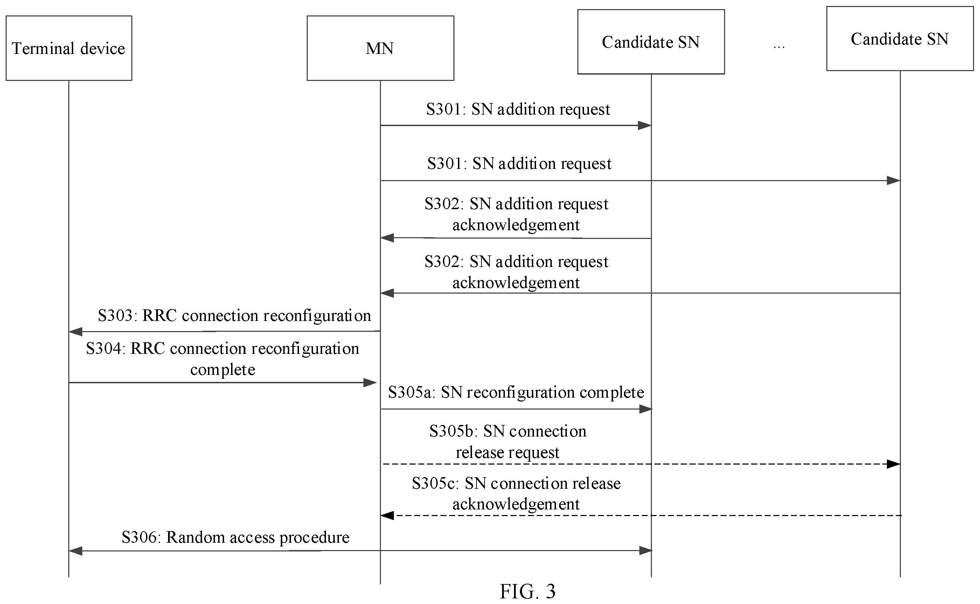

FIG. 3 is an example flowchart in which an MN triggers conditional PScell addition (conditional pscell addition, CPA). As shown in FIG. 3, a process in which the MN triggers the CPA may include the following steps. S301: The MN sends an SN addition request, for example, a secondary base station (secondary gNodeB, SgNB) addition request (SgNB addition request), to a candidate SN, there may be a plurality of candidate SNs, and the MN may send the request to each candidate SN. S302: The candidate SN sends an SN addition request acknowledge message for example, an SgNB addition request acknowledge (SgNB addition request acknowledge) message to the MN. S303: The MN sends an RRC connection reconfiguration message to the terminal device, where the message may include MN RRC connection reconfiguration and SN RRC connection reconfiguration. S304: A terminal device feeds back, to the MN, that the RRC connection reconfiguration is completed. The reconfiguration may include a trigger condition corresponding to a candidate PScell. The terminal device may evaluate the trigger condition, and determine a to-be-added PScell. S305a: The MN sends an SN reconfiguration complete message, for example, an SgNB reconfiguration complete (SgNB Reconfiguration complete) message, to an SN corresponding to the to-be-added PScell. S305b: The MN may send an SN connection release request to an SN corresponding to a PScell that does not need to be added. S305c: The SN corresponding to the PScell that does not need to be added may feed back an SN connection release request acknowledge message to the MN. S306: The terminal device may perform a random access procedure with the SN corresponding to the to-be-added PScell.

For example, the SN triggers CPCA. When a signaling radio bearer (signaling radio bearer, SRB) (for example, an SRB3) is established between the SN and a terminal device, the SN may pre-configure the terminal device via the SRB, including a trigger condition corresponding to a candidate PScell and configuration information used to access the PScell. When the trigger condition is met, the terminal device may access a corresponding PScell based on the preconfigured related information, without participation of an MN.

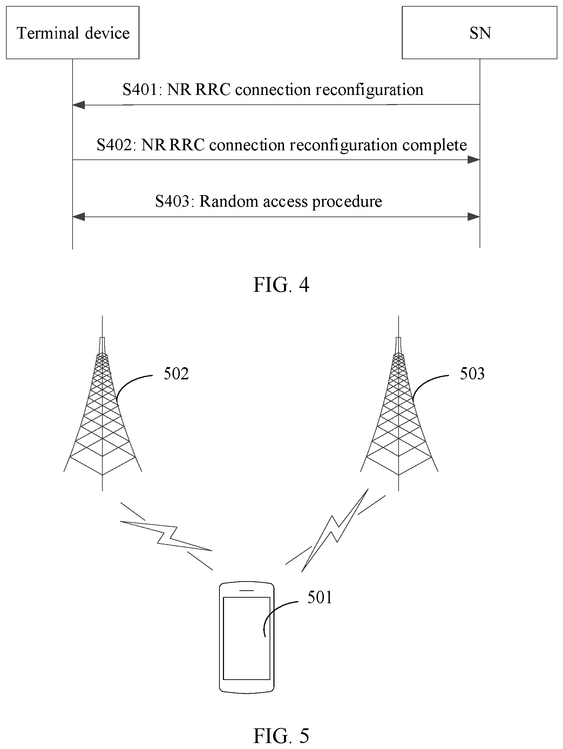

FIG. 4 is an example flowchart in which an SN triggers conditional PScell change (conditional pscell change, CPC). As shown in FIG. 4, a process in which the SN triggers the CPC may include the following steps. S401: The SN sends a new radio (new radio, NR) RRC connection reconfiguration message to a terminal device, where the message may indicate configuration information related to the CPC, for example, a trigger condition corresponding to a candidate PScell. S402: The terminal device returns an RRC connection reconfiguration complete message to the SN. S403: When the trigger condition of the PScell is met, the terminal device may perform a random access procedure with an SN corresponding to a PScell that is determined to be changed to.

In a related manner, CPCA based on layer 3 (layer 3, L3) measurement and signaling procedures is supported. A process of the L3 measurement is complex and requires a longer time for measurement and filtering, resulting in low CPCA efficiency. When a UE is in a fast fading channel, such as a high speed channel, a cell handover may be delayed, which brings adverse impacts such as radio link disconnection, data transmission interruption, and severe rate degradation.

Based on the foregoing problem, an embodiment of this application provides a primary secondary cell adjustment method. A main inventive concept of the method is as follows: supporting PScell addition or change triggered based on layer 1 (layer 1) measurement, thereby improving efficiency of PScell addition or change by improving measurement efficiency; and/or supporting advance uplink (uplink, UL)/downlink (downlink, DL) synchronization, so that a terminal device can quickly access a PScell that serves as a target cell, thereby improving efficiency of PScell addition or change.

It should be noted that, terms such as "first" and "second" are used in embodiments of this application to distinguish between same items or similar items that provide basically same functions or purposes. For example, first information and second information are merely used to distinguish different information, and a sequence of the first information and the second information is not limited. A person skilled in the art may understand that the terms such as "first" and "second" do not limit a quantity and an execution sequence, and the terms such as "first" and "second" do not indicate a definite difference.

It should be noted that, in embodiments of this application, the term "example" or "for example" is used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner.

It should also be noted that, in embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists. A and B may be singular or plural. The character "/" usually indicates an "or" relationship between the associated objects. "At least one of the following" or a similar expression means any combination of these items, including any combination of a single item or a plurality of items. For example, at least one of a, b, or c may indicate a, b, c, a and b, a and c, b and c, or a, b, and c, where a, b, and c may be singular or plural.

To better understand the primary secondary cell adjustment method provided in this embodiment of this application, the following describes an architecture of a communication system in this embodiment of this application with reference to FIG. 5.

For example, FIG. 5 is a diagram of an architecture of a communication system according to an embodiment of this application. As shown in FIG. 5, the communication system includes a terminal device 501, a first network device 502, and a second network device 503. The first network device 502 may be an MN, the second network device 503 may be an SN, and the terminal device 501 may be connected to each of the first network device 502 and the second network device 503. That is, the terminal device 501 is dually connected to the first network device 502 and the second network device 503. In the DC scenario, a source cell of the terminal device 502 may include a source Pcell and a source PScell. The source Pcell and the source PScell are not shown in the figure.

The terminal device in embodiments of this application may also be referred to as a terminal, and may be a device having a wireless transceiver function. The terminal device may be deployed on land, including an indoor device, an outdoor device, a handheld device, or a vehicle-mounted device; may be deployed on the surface of water (for example, in a steamship); or may be deployed in the air (for example, on an airplane, a balloon, and a satellite). The terminal device may be user equipment (user equipment, UE). The UE includes a handheld device, a vehicle-mounted device, a wearable device, or a compute device with a wireless communication function. For example, the UE may be a mobile phone (mobile phone), a tablet computer, or a computer with a wireless transceiver function. The terminal device may alternatively be a virtual reality (virtual reality, VR) terminal device, an augmented reality (augmented reality, AR) terminal device, a mixed reality (mixed reality, MR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support the terminal device in implementing the function. The apparatus may be mounted in the terminal device.

A network device involved in embodiments of this application includes an access network device and a core network device.

The access network (radio access network, RAN) device is an intermediate device used by the terminal device to access the core network device in wireless manner, is mainly responsible for radio resource management, quality of service (quality of service, QoS) management, data compression and encryption, and the like on an air interface side, for example: a base station NodeB, an evolved base station eNodeB, a base station (gNodeB) in a 5G mobile communication system or a new radio (new radio, NR) communication system, or a base station in a future mobile communication system.

The core network (core network, CN) device includes a user plane function (user plane function, UPF) network element, an access and mobility management function (access and mobility management function, AMF) network element, a session management function (session management function, SMF) network element, and a policy control function (policy control function, PCF) network element. The UPF network element is mainly responsible for transmitting user data, and other network elements may be referred to as a control plane function network element, and are mainly responsible for certification, authentication, registration management, session management, mobility management, policy control, and the like, to ensure reliable and stable transmission of the user data.

In embodiments of this application, an apparatus configured to implement a function of the network device may be a network device, or may be an apparatus, for example, a chip system, that can support the network device in implementing the function. The apparatus may be mounted in the network device.

The technical solutions provided in embodiments of this application may be applied to a long term evolution (long term evolution, LTE) architecture, and may be further applied to a universal mobile telecommunications system (universal mobile telecommunications system, UMTS) terrestrial radio access network (UMTS terrestrial radio access network, UTRAN) architecture, or a global system for mobile communications (global system for mobile communications, GSM)/enhanced data rate for GSM evolution (enhanced data rate for GSM evolution, EDGE) system radio access network (GSM EDGE radio access network, GERAN) architecture. In addition, the technical solutions provided in embodiments of this application may be further applied to any other wireless communication system that has a similar structure and function, for example, a public land mobile network (a public land mobile network, PLMN) system, a 5G communication system, or a communication system after 5G. This is not limited in embodiments of this application.

The wireless communication between the communication devices may include: wireless communication between a network device and a terminal device, wireless communication between network devices, and wireless communication between terminal devices. In embodiments of this application, the term "wireless communication" may also be referred to as "communication", and the term "communication" may also be described as "data transmission", "information transmission", or "transmission". A person skilled in the art may use the technical solutions provided in embodiments of this application to perform wireless communication between a network device and a terminal device, for example, wireless communication between an access network device and a terminal device.

The following describes in detail the technical solutions shown in this application by using specific embodiments. It should be noted that the following embodiments may exist independently or may be combined with each other. Same or similar content, for example, explanations and descriptions of terms or nouns and explanations and descriptions of steps, may be cross-referenced in different embodiments. Details are not described again.

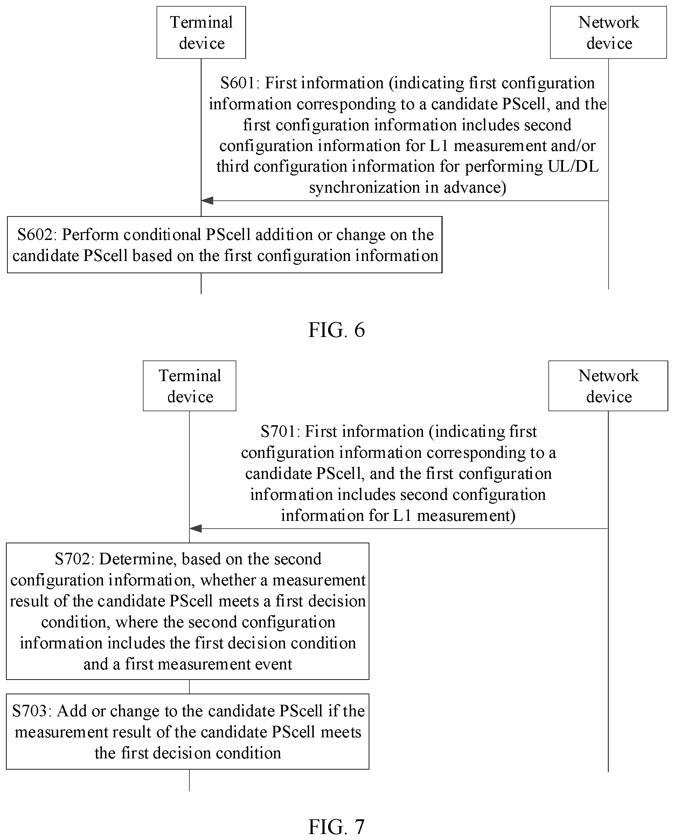

FIG. 6 is a diagram of a primary secondary cell adjustment method according to an embodiment of this application. As shown in FIG. 6, the primary secondary cell adjustment method provided in this embodiment includes the following steps:
S601: A network device indicates first information. The first information indicates first configuration information corresponding to a candidate PScell, and the first configuration information includes second configuration information for L1 measurement and/or third configuration information for performing UL/DL synchronization in advance.

The network device may be an access network device corresponding to a source cell in which a terminal device is located.

Optionally, the network device is an access network device corresponding to a source PCell in which the terminal device is located, that is, an MN corresponding to the source PCell, or the network device is an access network device corresponding to a source PScell in which the terminal device is located, that is, an SN corresponding to the source PScell. When the network device is the MN corresponding to the source PCell, conditional PScell addition or change is initiated by the MN. When the network device is the SN corresponding to the source PScell, conditional PScell addition or change is initiated by the SN.

The first configuration information is used for conditional PScell addition or change, that is, used for CPCA.

The candidate PScell is a PScell that can be added or changed by the terminal device. There may be one or more candidate PScells. When there is one candidate PScell, the first information indicates first configuration information corresponding to the candidate PScell. When there are a plurality of candidate PScells, the first information indicates first configuration information respectively corresponding to the plurality of candidate PScells. The first configuration information corresponding to the candidate PScell is used for candidate PScell addition or change.

In the first configuration information, the second configuration information is related to use of L1 measurement in the candidate PScell addition or change, for example, on which resources L1 measurement is performed, and which results obtained through L1 measurement are used to trigger the candidate PScell addition or change. The third configuration information is related to an UL/DL synchronization operation between the terminal device and the candidate PScell.

In this embodiment, the network device sends the first information to the terminal device, to indicate the first configuration information corresponding to the candidate PScell to the terminal device, and pre-configures the first configuration information for the terminal device, including pre-configuration of the first configuration information including the second configuration information and/or the third configuration information to the terminal device.

S602: The terminal device performs conditional PScell addition or change on the candidate PScell based on the first configuration information.

In this embodiment, the terminal device may perform L1 measurement on the source cell and/or the candidate PScell based on the second configuration information for L1 measurement, and perform conditional PScell addition or change on the candidate PScell based on a measurement situation of the L1 measurement and a configured threshold, so that efficiency of PScell addition or change is improved through L1 measurement with higher measurement efficiency. Additionally/alternatively, before conditional PScell addition or change is performed on the candidate PScell, UL/DL synchronization may be performed on the candidate PScell in advance based on the third configuration information for performing the UL/DL synchronization in advance, so that the terminal device can quickly access the PScell after determining to add or change to the PScell, thereby improving efficiency of the PScell addition or change. The DL synchronization may be performed before measurement (for example, L1 measurement) is performed on the source cell and/or the candidate PScell, and the UL synchronization may be performed before or after measurement is performed on the source cell and/or the candidate PScell.

In an implementation, the first configuration information includes the second configuration information for the L1 measurement, and the terminal device may perform the L1 measurement on the source cell and/or the candidate PScell based on the second configuration information, to obtain a measurement result of the L1 measurement. Based on the measurement result of the L1 measurement, conditional PScell addition or change is performed on the candidate PScell. For example, when the measurement result of the L1 measurement reflects that the candidate PScell meets a corresponding trigger condition, the terminal device adds or changes to the candidate PScell.

In another implementation, when the first configuration information includes the third configuration information for performing UL/DL synchronization in advance, the terminal device may perform UL/DL synchronization on the candidate PScell in advance based on the third configuration information. When the candidate PScell meets a corresponding trigger condition, the terminal device may add or change to the candidate PScell. Because the terminal device performs the UL/DL synchronization on the candidate PScell in advance, when adding or changing to the candidate PScell, the terminal device may directly establish a connection to the candidate PScell, thereby improving efficiency of PScell addition or change.

In still another implementation, when the first configuration information includes the second configuration information for the L1 measurement and the third configuration information for performing the UL/DL synchronization in advance, the terminal device may perform L1 measurement on the source cell and/or the candidate PScell based on the second configuration information, to obtain a measurement result of L1 measurement, and perform the UL/DL synchronization on the candidate PScell in advance based on the third configuration information. When determining, based on the measurement result of L1, that the candidate PScell meets a corresponding trigger condition, the terminal device may add or change to the candidate PScell. Because the terminal device performs the UL/DL synchronization on the candidate PScell in advance, when adding or changing to the candidate PScell, the terminal device may directly establish a connection to the candidate PScell. In this way, efficiency of PScell addition or change is improved through the L1 measurement and by performing the UL/DL synchronization in advance.

In this embodiment of this application, the network device pre-configures, for the terminal device, the first configuration information corresponding to the candidate PScell, where the first configuration information includes the second configuration information for the L1 measurement and/or the third configuration information for performing the UL/DL synchronization in advance. In this way, during the PScell addition or change, the terminal device may improve measurement efficiency through the L1 measurement, and/or improve efficiency of the terminal device in accessing the candidate PScell by performing the UL/DL synchronization on the candidate PScell in advance, thereby improving efficiency of PScell addition or change, and reducing a probability of a delayed PScell handover when UE is in a fast fading channel such as a high speed channel.

Optionally, in addition to the second configuration information and the third configuration information, the first configuration information may further include fourth configuration information for performing data transmission and RRC control in the candidate PScell. After adding or changing to the candidate PScell, the terminal device may transmit data and control signaling with the candidate PScell based on the fourth configuration information.

The following provides an optional solution of the second configuration information.

Optionally, the second configuration information may include resource configuration information for L1 measurement and/or result processing configuration information for L1 measurement result processing. The network device pre-configures, for the terminal device in a manner of indicating the first information, the resource configuration information for the L1 measurement and/or the result processing configuration information for the L1 measurement result processing, so that the terminal device, when performing conditional PScell addition or change on the candidate PScell, may perform the L1 measurement based on the resource configuration information, and/or perform the L1 measurement result processing based on the result processing configuration information.

An optional solution of the resource configuration information in the second configuration information is as follows:
Optionally, the resource configuration information for the L1 measurement may include time-frequency resource information of a measurement object related to channel state information (channel state information, CSI) and/or a synchronization signal block (synchronization signaling block, SSB). Both the CSI and the SSB may reflect quality of service of a cell, the time-frequency resource information of the measurement object related to the CSI and/or the SSB is configured, and an obtained L1 measurement result may include a measurement result of the measurement object related to the CSI and/or the SSB. In this way, the L1 measurement result can reflect the quality of service of the cell, thereby improving accuracy of PScell addition or change.

In this optional manner, the network device pre-configures, in the manner of indicating the first information, time-frequency resource information of a measurement object related to the CSI for the terminal device, and/or pre-configures time-frequency resource information of a measurement object related to the SSB for the terminal device. When performing conditional PScell addition or change on the candidate PScell, the terminal device may perform, based on the time-frequency resource information of the measurement object related to the CSI, L1 measurement of the measurement object related to the CSI on the source cell and/or the candidate PSCcell; and/or perform, based on the time-frequency resource information of the measurement object related to the SSB, L1 measurement of the measurement object related to the CSI on the source cell and/or the candidate PSCcell.

For example, the measurement object related to the CSI may include a CSI-reference signal (reference signal, RS). The terminal device performs L1 measurement of the CSI-RS on the source cell, to obtain a CSI-RS measurement result of the source cell, where the measurement result may reflect quality of service of the source cell. The terminal device performs L1 measurement of the CSI-RS on a candidate cell, to obtain a CSI-RS measurement result of the candidate cell, where the measurement result may reflect quality of service of the candidate cell.

For example, the measurement object related to the SSB may include the SSB.

For example, the time-frequency resource information of the measurement object related to the CSI and/or the SSB may include a resource position of the measurement object, for example, a resource position of the CSI-RS and a resource position of the SSB, where the resource position is, for example, a time-domain position and a frequency-domain position of a resource.

In the second configuration information, an optional solution of the result processing configuration information is as follows:
Optionally, the result processing configuration information for the L1 measurement result processing may include: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger performing UL/DL synchronization in advance.

It can be learned that, during conditional PScell addition or change, the measurement result obtained through the L1 measurement may be used to trigger one or more of the following operations: measurement result reporting of the L1 measurement, candidate PScell addition or change, and performing UL/DL synchronization in advance. Whether to trigger and which operation to trigger are determined based on the decision condition and the measurement event in the result processing configuration information. An appropriate decision condition and measurement event can be configured to improve accuracy and reasonableness of triggering the one or more of measurement result reporting of the L1 measurement, candidate PScell addition or change, and performing UL/DL synchronization in advance.

The first measurement event and the second measurement event are L1 measurement events. When the L1 measurement result meets an event definition of the first measurement event, it indicates that the L1 measurement result meets the first measurement event. When the L1 measurement result meets an event requirement of the second measurement event, it indicates that the L1 measurement result meets the second measurement event.

The first measurement event and the second measurement event may be a same event or different events.

The first decision condition is a decision condition described with reference to the first measurement event and the L1 measurement result. For example, the first decision condition is that all L1 measurement results meet the first measurement event, and some L1 measurement results meet the first measurement event. The second decision condition is a decision condition described in combination with the second measurement event and the L1 measurement result.

Optionally, because the first decision condition and the second decision condition are used to trigger different operations, the first decision condition and the second decision condition are different decision conditions, and may configure an appropriate decision condition for different operations. That the first decision condition is different from the second decision condition may include: A condition definition of the first decision condition is different from a condition definition of the second decision condition, and/or the first measurement event is different from the second measurement event.

The measurement result of the L1 measurement may include a measurement result of the candidate PScell, and may further include a measurement result of the source cell. The measurement result of the source cell includes a measurement result of the source Pcell and/or a measurement result of the source PScell, for example, a CSI-RS measurement result of the source Pcell, a CSI-RS measurement result of the source PScell, and a CSI-RS measurement result of the candidate PScell.

In this optional manner, after performing the L1 measurement, the terminal device may obtain the measurement result of the L1 measurement. The terminal device may determine, based on the measurement result of the L1 measurement, the first decision condition, and the first measurement event, whether the measurement result of the candidate PScell meets the first decision condition. If the measurement result of the L1 measurement meets the first decision condition, the terminal device may trigger measurement result reporting of the L1 measurement and/or candidate PScell addition or change. Additionally/alternatively, the terminal device may determine, based on the measurement result of L1 measurement, the second decision condition, and the second measurement event, whether the measurement result of the candidate PScell meets the second decision condition, and if the measurement result of the candidate PScell meets the second decision condition, the terminal device may trigger performing UL/DL synchronization in advance.

For the first measurement event and the second measurement event, the following optional solutions are provided:

Optionally, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value.

The first absolute value, the first threshold, the first limit value, and the second limit value are configured thresholds.

The second limit value may be greater than the first limit value.

In this optional manner, that the measurement result of the candidate PScell is greater than the first absolute value indicates that quality of service of the candidate PScell is good. That the difference between the measurement result of the candidate PScell and the first threshold is greater than the measurement result of the source Pcell, and/or the difference between the measurement result of the candidate PScell and the first threshold is greater than the measurement result of the source PScell indicates that the quality of service of the candidate PScell is better than quality of service of the source Pcell and/or quality of service of the source PScell. That the measurement result of the source Pcell and/or the measurement result of the source PScell are/is less than the first limit value, and the measurement result of the candidate PScell is greater than the second limit value indicates that the quality of service of the source Pcell and/or the source PScell are/is relatively poor, and the quality of service of the candidate PScell is relatively good.

In this optional manner, based on the resource configuration information for L1 measurement, the terminal device may perform L1 measurement on the candidate PScell, to obtain the measurement result of the candidate PScell, or measure the candidate PScell, the source Pcell, and the source PScell, to obtain the measurement result of the candidate PScell, the measurement result of the source Pcell, and the measurement result of the source PScell. The terminal device may determine whether the measurement result of the candidate PScell meets the first measurement event, and/or determine whether the measurement result of the candidate PScell, the measurement result of the source Pcell, and the measurement result of the candidate PScell meet the first measurement event.

Optionally, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value.

The first absolute value, the first threshold, the first limit value, and the second limit value are configured thresholds. Because the first measurement event and the second measurement event may be the same or different events, the first absolute value and the second absolute value may be the same or different absolute values, the first threshold and the second threshold may be the same or different thresholds, the first limit value and the third limit value may be the same threshold or different limit values, and the second limit value and the fourth limit value may be the same threshold or different limit values.

The fourth limit value may be greater than the third limit value.

In this optional manner, that the measurement result of the candidate PScell is greater than the second absolute value indicates that quality of service of the candidate PScell is good. That the difference between the measurement result of the candidate PScell and the second threshold is greater than the measurement result of the source Pcell, and/or the difference between the measurement result of the candidate PScell and the second threshold is greater than the measurement result of the source PScell indicates that the quality of service of the candidate PScell is better than quality of service of the source Pcell and/or quality of service of the source PScell. That the measurement result of the source Pcell and/or the measurement result of the source PScell are/is less than the third limit value, and the measurement result of the candidate PScell is greater than the fourth limit value indicates that the quality of service of the source Pcell and/or the source PScell are/is relatively poor, and the quality of service of the candidate PScell is relatively good.

In this optional manner, based on the resource configuration information for L1 measurement, the terminal device may perform L1 measurement on the candidate PScell, to obtain the measurement result of the candidate PScell, or measure the candidate PScell, the source Pcell, and the source PScell, to obtain the measurement result of the candidate PScell, the measurement result of the source Pcell, and the measurement result of the source PScell. The terminal device may determine whether the measurement result of the candidate PScell meets the second measurement event, and/or determine whether the measurement result of the candidate PScell, the measurement result of the source Pcell, and the measurement result of the candidate PScell meet the second measurement event.

Optionally, considering that performing UL/DL synchronization in advance needs to be triggered earlier than L1 measurement result reporting or candidate PScell addition or change, and the second measurement event is satisfied more easily than the first measurement event. Therefore, the second absolute value may be less than the first absolute value; and/or the second threshold may be less than the first threshold; and/or the third limit value may be greater than the first limit value; and/or the fourth limit value may be less than the second limit value.

For the first decision condition and the second decision event, the following optional solutions are provided:
Optionally, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event.

The first time window is a configured time interval.

N and M are configured constants, and values of N and M may be the same or different.

For example, that the measurement result obtained from each measurement meets the first measurement event may include one or more of the following: in a measurement result obtained from each L1 measurement, the measurement result of the candidate PScell is greater than the first absolute value; in the measurement result obtained from each L1 measurement, the difference between the measurement result of the candidate PScell and the first threshold is greater than the measurement result of the source Pcell, and/or the difference between the measurement result of the candidate PScell and the first threshold is greater than the measurement result of the source PScell; and in the measurement result obtained from each L1 measurement, the measurement result of the source Pcell and/or the measurement result of the source PScell are/is less than the first limit value, and the measurement result of the candidate PScell is greater than the second limit value.

For example, the average value of the measurement results obtained from all measurements may include one or more of the following: an average value of measurement results of the candidate PScell obtained from all measurements, an average value of measurement results of the source Pcell obtained from all measurements, and an average value of measurement results of the source PScell obtained from all measurements. That the average value of the measurement results obtained from all measurements meets the first measurement event may include one or more of the following: an average value of measurement results of the candidate PScell obtained from all measurements is greater than the first absolute value; a difference between the average value of the measurement results of the candidate PScell obtained from all measurements and the first threshold is greater than the average value of the measurement results of the source Pcell obtained from all measurements, and/or the difference between the average value of the measurement results of the candidate PScell obtained from all measurements and the first threshold is greater than the average value of the measurement results of the source PScell obtained from all measurements; and the average value of the measurement results of the source Pcell obtained from all measurements and/or the average value of the measurement results of the source PScell obtained from all measurements are/is less than the first limit value, and the average value of the measurement results of the candidate PScell obtained from all measurements is greater than the second limit value.

For example, the measurement results obtained from the at least N measurements may include one or more of the following: measurement results of the candidate PScell obtained from the at least N measurements, measurement results of the source Pcell obtained from the at least N measurements, and measurement results of the source PScell obtained from the at least N measurements. That the measurement result obtained from the at least N measurements meets the first measurement event may include one or more of the following: in the at least N measurements, the measurement results of the candidate PScell are greater than the first absolute value; in the at least N measurements, a difference between the measurement results of the candidate PScell and the first threshold is greater than the measurement results of the source Pcell, and/or the difference between the measurement results of the candidate PScell and the first threshold is greater than the measurement results of the source PScell; and in the at least N measurements, the measurement results of the source Pcell and/or the measurement results of the source PScell are less than the first limit value, and the measurement results of the candidate PScell are greater than the second limit value.

For the measurement results obtained from the N consecutive measurements, refer to an example description of the measurement results obtained from the at least N measurements. For the fact that the measurement results obtained from the N consecutive measurements all meet the first measurement event, refer to an example description of the fact that the measurement results obtained from the at least N measurements all meet the first measurement event. Details are not described again. For the fact that the measurement results obtained from the at least M measurements in the measurement results obtained from the N consecutive measurements meet the first measurement event, and that the average value of the measurement results obtained from the N consecutive measurements meets the first measurement event, refer to a combination of the foregoing examples, and examples are not enumerated herein one by one.

In this optional manner, the terminal device may determine whether an extent to which the L1 measurement result meets the first measurement event meets the first decision condition. If the extent to which the L1 measurement result meets the first measurement event meets the first decision condition, it indicates that the measurement result of the candidate PScell meets the first decision condition, and the terminal device may be triggered to perform measurement result reporting of L1 measurement and/or candidate PScell addition or change.

Optionally, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event.

The second time window is a configured time interval. The first time window and the second time window may be the same or different.

N and M are configured constants, and values of N and M may be the same or different.

For the second decision condition, reference may be made to the first decision condition, and examples of the second decision condition are not enumerated herein one by one.

In this optional manner, the terminal device may determine whether an extent to which the L1 measurement result meets the second measurement event meets the second decision condition. If the extent to which the L1 measurement result meets the second measurement event meets the second decision condition, it indicates that the measurement result of the candidate PScell meets the second decision condition, and the terminal device may be triggered to perform UL/DL synchronization in advance.

Optionally, the first configuration information includes one or more of the following: the first time window, the second time window, a measurement interval between N measurements, a measurement interval between M measurements, and a measurement interval between adjacent measurements. In other words, the network device may configure the first time window, the second time window, the measurement interval between N measurements, the measurement interval between M measurements, and the measurement interval between adjacent measurements for the terminal device by using the first configuration information.

The adjacent measurements may refer to two consecutive measurements in all measurements, at least N measurements, N consecutive measurements, and at least M measurements. For example, if the first time window is 20 milliseconds (ms), and measurement is performed every 2 ms, 10 measurements may be performed in the first time window, and 2 ms is a measurement interval between adjacent measurements.

In the second configuration information, the result processing configuration information further includes the following optional solutions:
Optionally, the result processing configuration information further includes one or more of the following: a cell identifier, a quantity of measured beams, the measurement object related to the CSI and/or the SSB, a measurement type, and an L1 measurement interval. The cell identifier may be a cell identifier of the candidate PScell, and the cell identifier is, for example, a physical cell identifier (physical cell identifier, PCI). The quantity of measured beams is, for example, total J beams need to be measured for K candidate PScells. The measurement type is, for example, an indicator and an attribute for performing L1 measurement on the measurement object. The L1 measurement interval refers to an interval at which the terminal device performs L1 measurement.

The L1 measurement interval may be the same as or different from the measurement interval between the adjacent measurements. For example, the L1 measurement interval may be used as the measurement interval of the adjacent measurements, or a separate measurement interval of adjacent measurements may be further configured.

Optionally, the measurement type includes one or more of the following: reference signal received power (reference signal receiving power, RSRP), reference signal received quality (reference signal receiving quality, RSRQ), and a signal to interference plus noise ratio (signal to interference plus noise ratio, SINR). These measurement types reflect quality of service of a cell. L1 measurement is performed on these measurement types of the measurement object, helping the terminal device select a cell with better quality of service during PScell addition or change.

Optionally, the measurement object includes an SSB and/or a CSI-RS. For the measurement object, refer to the foregoing description. Details are not described again.

FIG. 7 is a diagram of a primary secondary cell adjustment method according to another embodiment of this application. As shown in FIG. 7, the primary secondary cell adjustment method provided in this embodiment includes the following steps:
S701: A network device indicates first information. The first information indicates first configuration information corresponding to a candidate PScell, and the first configuration information includes second configuration information for L1 measurement.
S702: A terminal device determines, based on the second configuration information, whether a measurement result of the candidate PScell meets a first decision condition, where the second configuration information includes the first decision condition and a first measurement event.

For implementation principles and technical effects of S701 and S702, refer to the foregoing embodiments. Details are not described herein again.

S703: The terminal device adds or changes to the candidate PScell if the measurement result of the candidate PScell meets the first decision condition. Changing to the candidate PScell is to be handed over to the candidate PScell.

In this embodiment, the terminal device may determine, based on a measurement result of L1 measurement, the first decision condition, and the first measurement event, whether the measurement result of the candidate PScell meets the first decision condition. For the determining process, refer to the description in the foregoing embodiment. If the candidate PScell meets the first decision condition, it indicates that the candidate PScell meets a PScell addition or change condition, and the terminal device may add or change to the candidate PScell. There may be a plurality of candidate PScells. If measurement results respectively corresponding to the plurality of candidate PScells meet the first decision condition, a candidate PScell to be added or to be handed over to may be determined from the plurality of candidate PScells, and the terminal device adds or changes to the candidate PScell.

In this embodiment of this application, when the first information includes the second configuration information for L1 measurement, and the second configuration information includes the first decision condition and the first measurement event, the terminal device may perform L1 measurement, and trigger PScell addition or change based on the measurement result of the L1 measurement, improving efficiency of PScell addition or change.

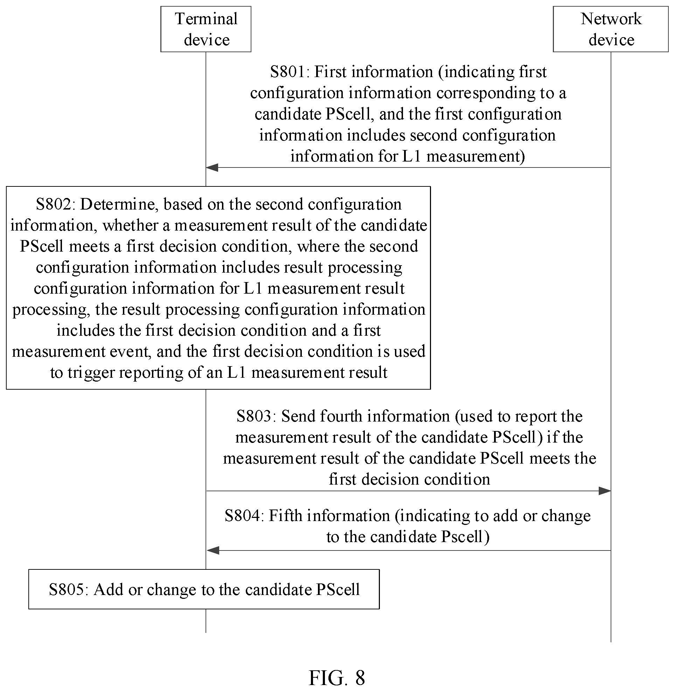

FIG. 8 is a diagram of a primary secondary cell adjustment method according to another embodiment of this application. As shown in FIG. 8, the primary secondary cell adjustment method provided in this embodiment includes the following steps:
S801: A network device indicates first information. The first information indicates first configuration information corresponding to a candidate PScell, and the first configuration information includes second configuration information for L1 measurement.
S802: A terminal device determines, based on the second configuration information, whether a measurement result of the candidate PScell meets a first decision condition. The second configuration information includes result processing configuration information for L1 measurement result processing, the result processing configuration information includes the first decision condition and a first measurement event, and the first decision condition is used to trigger reporting of an L1 measurement result.

For implementation principles and technical effects of S801 and S802, refer to the foregoing embodiments. Details are not described herein again.

S803: The terminal device sends fourth information if the measurement result of the candidate PScell meets the first decision condition, where the fourth information is used to report the measurement result of the candidate PScell.

In this embodiment, the terminal device may send the fourth information to the network device if the measurement result of the candidate PScell meets the first decision condition, to report the measurement result of the candidate PScell to the network device.

S804: The network device indicates fifth information, where the fifth information indicates to add or change to the candidate PScell.

In this embodiment, after obtaining the measurement result of the candidate PScell, the network device may determine whether to perform candidate PScell addition or change. If it is determined to perform candidate PScell addition or change, the network device may send the fifth information to the terminal device, to indicate the terminal device to add or change to the candidate PScell.

S805: The terminal device adds or changes to the candidate PScell.

In this embodiment of this application, when the first information includes the second configuration information for L1 measurement, and the second configuration information includes the first decision condition and the first measurement event, the terminal device may perform L1 measurement, and trigger proactive reporting of the L1 measurement result based on the measurement result of the L1 measurement, to perform PScell addition or change under the indication of the network device.

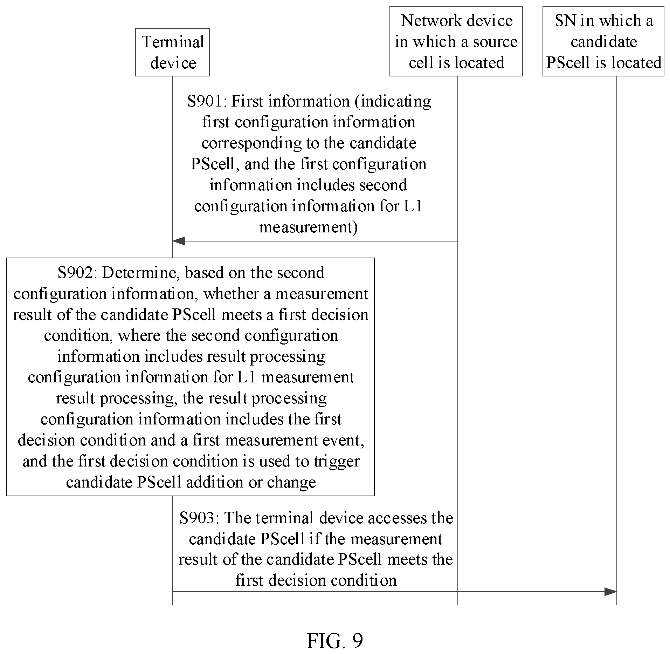

FIG. 9 is a diagram of a primary secondary cell adjustment method according to another embodiment of this application. As shown in FIG. 9, the primary secondary cell adjustment method provided in this embodiment includes the following steps:

S901: A network device in which a source cell is located indicates first information. The first information indicates first configuration information corresponding to a candidate PScell, and the first configuration information includes second configuration information for L1 measurement.

The network device in which the source cell is located may be a network device in which a source Pcell is located or an SN in which a source PScell is located.

S902: A terminal device determines, based on the second configuration information, whether a measurement result of the candidate PScell meets a first decision condition. The second configuration information includes result processing configuration information for L1 measurement result processing, the result processing configuration information includes the first decision condition and a first measurement event, and the first decision condition is used to trigger candidate PScell addition or change.

For implementation principles and technical effects of S901 and S902, refer to the foregoing embodiments. Details are not described herein again.

S903: The terminal device accesses the candidate PScell if the measurement result of the candidate PScell meets the first decision condition.

In this embodiment, if the measurement result of the candidate PScell meets the first decision condition, the terminal device may communicate with an SN in which the candidate PScell is located, to access the candidate PScell. For example, the terminal device may request, from the SN in which the candidate PScell is located, to add or change to the candidate PScell. The SN in which the candidate PScell is located may send an RRC connection reconfiguration message to the terminal device, and the terminal device may send an RRC connection reconfiguration complete message to the SN.

In this embodiment of this application, when the first information includes the second configuration information for L1 measurement, and the second configuration information includes the first decision condition and the first measurement event, the terminal device may perform L1 measurement, and trigger PScell addition or change based on the measurement result of the L1 measurement, thereby enabling the terminal device to actively add or change to a PScell.

When the first information includes third configuration information for performing UL/DL synchronization in advance, after obtaining the third configuration information, the terminal device may perform UL/DL synchronization in advance with the candidate PScell based on the third configuration information. The third configuration information may be existing configuration information for UL/DL synchronization, which is not limited herein.

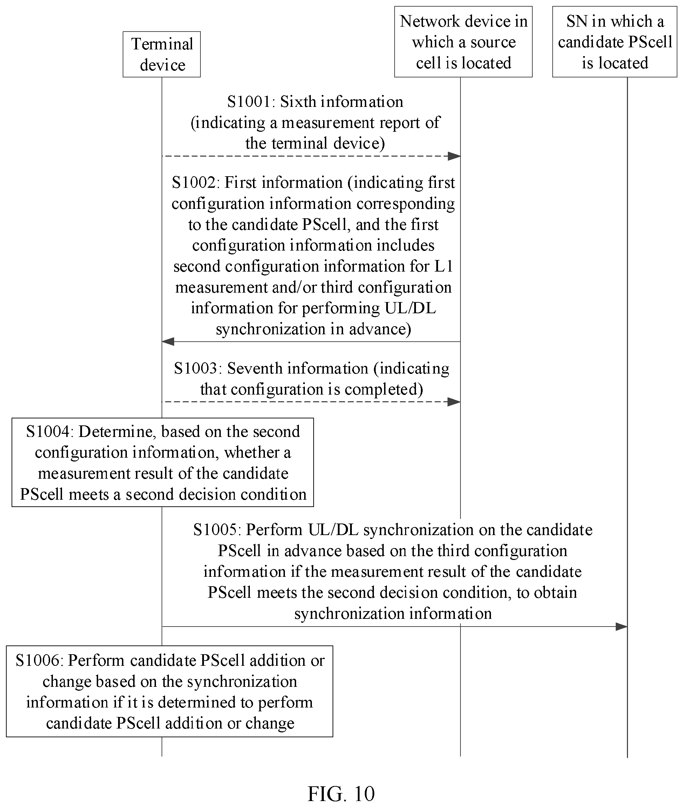

FIG. 10 is a diagram of a primary secondary cell adjustment method according to another embodiment of this application. As shown in FIG. 10, the primary secondary cell adjustment method provided in this embodiment includes the following steps:
S1001: A terminal device sends sixth information. The sixth information indicates a measurement report of the terminal device.
S1001 is an optional step.

In this embodiment, the terminal device reports the measurement report, for example, a measurement report of a neighboring cell condition or a channel quality, to a network device.

S1002: The network device in which a source cell is located indicates first information. The first information indicates first configuration information corresponding to a candidate PScell, and the first configuration information includes second configuration information for L1 measurement and third configuration information for performing UL/DL synchronization in advance.

For an implementation principle and technical effects of S1002, refer to the foregoing embodiment. For the first configuration information, the second configuration information, the third configuration information, and the network device in which the source cell is located, refer to descriptions in the foregoing embodiment. Details are not described again.

Optionally, the network device in which the source cell is located may indicate the first information to the terminal device based on the measurement report of the terminal device, and configure, for the terminal based on the measurement report of the terminal device, first configuration information corresponding to an appropriate candidate PScell.

Optionally, the first information may be carried in an RRC reconfiguration message.

S1003: The terminal device sends seventh information, where the seventh information indicates that configuration is completed.

S1003 is an optional step.

In this embodiment, after the first configuration information is configured, the terminal device may send the seventh information to the network device in which the source cell is located, to notify the network device in which the source cell is located that the first configuration information has been configured on the terminal device side.

Optionally, the seventh information may be carried in an RRC reconfiguration complete message.

S1004: The terminal device determines, based on the second configuration information, whether a measurement result of the candidate PScell meets a second decision condition.

In this embodiment, the second configuration information includes the second decision condition and a second measurement event. After performing L1 measurement, the terminal device may determine, based on a measurement result of L1 measurement, the second decision condition, and the second measurement event, whether the measurement result of the candidate PScell meets the second decision condition. For a specific determining process, refer to the foregoing embodiment. Details are not described again.

S1005: Perform UL/DL synchronization on the candidate PScell in advance based on the third configuration information if the measurement result of the candidate PScell meets the second decision condition, to obtain synchronization information.

In this embodiment, if the measurement result of the candidate PScell meets the second decision condition, performing UL/DL synchronization between the terminal device and the candidate PScell may be triggered in advance. The terminal device may perform, based on the third configuration information, UL/DL synchronization between the terminal device and the candidate PScell with an SN in which the candidate PScell is located, to obtain the synchronization information. After obtaining the synchronization information, the terminal device may save the synchronization information, so as to use the synchronization information in a subsequent process of PScell addition or change.

Optionally, the synchronization information may include a primary synchronization signal (primary synchronization signal, PSS), a secondary synchronization signal (secondary synchronization signal, SSS), and a physical broadcast channel (physical boardcast signal, PBCH) information corresponding to the candidate PScell, and/or the synchronization information may include a timing advance (timing advance TA) timing information. The PSS, the SSS, and the PBCH information are used for DL synchronization, and the TA timing information is used for UL synchronization.

Optionally, performing UL/DL synchronization on the candidate PScell in advance based on the third configuration information to obtain the synchronization information may include: The terminal device sends second information, where the second information is used to request to perform UL/DL synchronization on the candidate PScell in advance. The SN in which the candidate PScell is located indicates third information, where the third information indicates the PSS, the SSS, and the PBCH information corresponding to the candidate PScell, or the third information indicates the TA timing information corresponding to the candidate PScell. Therefore, the PSS, SSS, and PBCH information used for DL synchronization are obtained in advance, and/or the TA timing information used for UL synchronization is obtained in advance, so as to improve efficiency of accessing the candidate PScell by the terminal device, thereby improving efficiency of PScell addition or change.

In this optional manner, the terminal device may send the second information to the SN in which the candidate PScell is located, to request to perform UL/DL synchronization on the candidate PScell in advance. The SN in which the candidate PScell is located may indicate the third information to the terminal device. The terminal device obtains the third information, obtains the PSS, the SSS, and the PBCH information corresponding to the candidate PScell from the third information, and/or obtains the TA timing information corresponding to the candidate PScell from the third information, implementing UL/DL synchronization in advance.

Optionally, when the third information indicates the TA timing information corresponding to the candidate PScell, the second information is used to initiate a PRACH access of the candidate PScell. Alternatively, when the third information indicates the PSS, the SSS, and the PBCH information corresponding to the candidate PScell, the second information is used to request to read an SSB of the candidate PScell. As a result, the terminal device may obtain the TA timing information by initiating the PRACH access of the candidate PScell, and may obtain the PSS, SSS, and PBCH information corresponding to the candidate PScell by requesting to read the SSB of the candidate PScell.

S1006: The terminal device performs candidate PScell addition or change based on the synchronization information if it is determined to perform candidate PScell addition or change.

In this embodiment, when it is determined to perform candidate PScell addition or change, the terminal device may directly perform candidate PScell addition or change based on the synchronization information, without performing UL/DL synchronization on the candidate PScell, thereby improving efficiency of candidate PScell addition or change.

Optionally, the terminal device determines, based on the measurement result of L1 measurement, the first decision condition in the result processing configuration information, and the first measurement event in the result processing configuration information, whether the measurement result of the candidate PScell meets the first decision condition. If the measurement result of the candidate PScell meets the first decision condition, the terminal device may be triggered to perform candidate PScell addition or change, that is, determine to perform candidate PScell addition or change. Alternatively, if the measurement result of the candidate PScell meets the first decision condition, the terminal device may be triggered to perform measurement result reporting of L1. If the terminal device receives fifth information that indicates to add or change to the candidate PScell, it indicates that the terminal device determines to perform candidate PScell addition or change.

Optionally, the first configuration information further includes a physical uplink control channel (physical uplink control channel, PUCCH) configuration information indicating PRACH-free access corresponding to the candidate PScell. Performing candidate PScell addition or change based on the synchronization information includes: determining validity of the TA timing information. If the TA timing information is valid, the terminal device communicates with a candidate SN in which the candidate PScell cell is located based on the PUCCH configuration information. If the TA timing information is invalid, the terminal device initiates a PRACH access to the candidate SN. Therefore, when the TA timing information is valid, the terminal device may directly communicate with the candidate SN in which the candidate PScell cell is located, and does not need to initiate a PRACH access, thereby improving efficiency of candidate PScell addition or change.

For example, whether the TA timing information is valid may be determined by using a configured duration threshold.

In this embodiment of this application, the network device in which the source cell is located configures the first configuration information for the terminal device. When the terminal device is triggered, based on the first configuration information, to perform the UL/DL synchronization on the candidate PScell in advance, the terminal device performs the UL/DL synchronization on the candidate PScell, to obtain and store the synchronization information. When it is determined to perform candidate PScell addition or change, the terminal device may perform candidate PScell addition or change based on the synchronization information. In particular, when the TA information is valid, the terminal device may perform direct communication with PRACH-free access, thereby improving efficiency of PScell addition or change.

The primary secondary cell adjustment method in embodiments of this application is described above. The following describes an apparatus for performing the foregoing method provided in embodiments of this application. A person skilled in the art may understand that the method and the apparatus may be mutually combined and referenced. The related apparatus provided in this embodiment of this application can perform the steps in the foregoing list method.

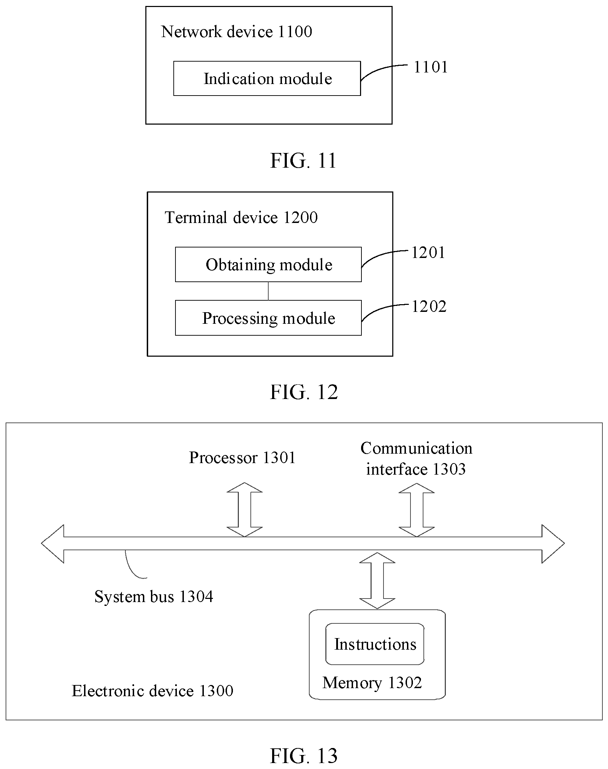

FIG. 11 is a diagram of a network device according to an embodiment of this application. As shown in FIG. 11, the network device 1100 includes an indication module 1101.

The indication module 1101 is configured to indicate first information. The first information indicates first configuration information corresponding to a candidate PScell, the first configuration information is used in conditional PScell addition or change, and the first configuration information includes second configuration information for L1 measurement and/or third configuration information for performing uplink UL/downlink DL synchronization in advance.

In an optional embodiment, the second configuration information may include: resource configuration information for L1 measurement and/or result processing configuration information for L1 measurement result processing.

In an optional embodiment, the resource configuration information includes time-frequency resource information of a measurement object related to CSI and/or an SSB.

In an optional embodiment, the result processing configuration information includes: a first decision condition and a first measurement event for determining the first decision condition, where the first decision condition is used to trigger measurement result reporting of the L1 measurement and/or the candidate PScell addition or change; and/or a second decision condition and a second measurement event for determining the second decision condition, where the second decision condition is used to trigger performing UL/DL synchronization in advance.

In an optional embodiment, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value.

In an optional embodiment, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event.

In an optional embodiment, the first configuration information includes one or more of the following: the first time window, the second time window, a measurement interval between N measurements, a measurement interval between M measurements, and a measurement interval between adjacent measurements.

In an optional embodiment, the result processing configuration information further includes one or more of the following: a cell identifier, a quantity of measured beams, the measurement object related to the CSI and/or the SSB, a measurement type, and an L1 measurement interval.

In an optional embodiment, the measurement type includes one or more of the following: RSRP, RSRQ, and an SINR.

In an optional embodiment, an obtaining module (not shown in the figure) is further included, and is configured to obtain second information, where the second information is used to request to perform UL/DL synchronization on the candidate PScell in advance. The indication module 1101 is further configured to indicate third information. The third information indicates the PSS, SSS, and PBCH information corresponding to the candidate PScell, and the PSS, SSS, and PBCH information are used for DL synchronization; or the third information indicates the TA timing information corresponding to the candidate PScell, and the TA timing information is used for UL synchronization.

In an optional embodiment, when the third information indicates the TA timing information corresponding to the candidate PScell, the second information is used to initiate a PRACH access of the candidate PScell. Alternatively, when the third information indicates the PSS, the SSS, and the PBCH information corresponding to the candidate PScell, the second information is used to request to read an SSB of the candidate PScell.

The network device provided in this embodiment is configured to implement the technical solutions of the network device in the foregoing method embodiments. Implementation principles and technical effects thereof are similar. Details are not described herein again.

FIG. 12 is a diagram of a terminal device according to an embodiment of this application. As shown in FIG. 12, the terminal device 1200 includes an obtaining module 1201 and a processing module 1202.

The obtaining module 1201 is configured to obtain first information. The first information indicates first configuration information corresponding to a candidate PScell, and the first configuration information includes second configuration information for L1 measurement and/or third configuration information for performing UL/DL synchronization in advance. The processing module 1202 is configured to perform conditional PScell addition or change on the candidate PScell based on the first configuration information.

In an optional embodiment, the second configuration information may include: resource configuration information for L1 measurement and/or result processing configuration information for an L1 measurement result.

In an optional embodiment, the resource configuration information includes time-frequency resource information of a measurement object related to CSI and/or an SSB.

In an optional embodiment, the result processing configuration information includes: a first decision condition and a first measurement event for determining the first decision condition, where the first decision condition indicates measurement result reporting of the L1 measurement and/or triggering the candidate PScell addition or change; and/or a second decision condition and a second measurement event for determining the second decision condition, where the second decision condition indicates performing UL/DL synchronization in advance.

In an optional embodiment, the first measurement event includes one or more of the following: the measurement result of the candidate PScell is greater than a first absolute value; a difference between the measurement result of the candidate PScell and a first threshold is greater than the measurement result of the source Pcell, and/or a difference between the measurement result of the candidate PScell and the first threshold is greater than the measurement result of the source PScell; and the measurement result of the source Pcell and/or the measurement result of the source PScell are/is less than a first limit value, and the measurement result of the candidate PScell is greater than a second limit value. Additionally/alternatively, the second measurement event includes one or more of the following: the measurement result of the candidate PScell is greater than a second absolute value; a difference between the measurement result of the candidate PScell and a second threshold is greater than the measurement result of the source Pcell, and/or a difference between the measurement result of the candidate PScell and the second threshold is greater than the measurement result of the source PScell; and the measurement result of the source Pcell and/or the measurement result of the source PScell are/is less than a third limit value, and the measurement result of the candidate PScell is greater than a fourth limit value.

In an optional embodiment, the first decision condition includes one or more of the following: in a first time window, a measurement result obtained from each measurement meets the first measurement event; in the first time window, an average value of measurement results obtained from all measurements meets the first measurement event; in the first time window, measurement results obtained from at least N measurements all meet the first measurement event; measurement results obtained from N consecutive measurements all meet the first measurement event; measurement results obtained from at least M measurements in the measurement results obtained from the N consecutive measurements all meet the first measurement event; and an average value of the measurement results obtained from the N consecutive measurements meets the first measurement event. Additionally/alternatively, the second decision condition includes one or more of the following: in a second time window, a measurement result obtained from each measurement meets the second measurement event; in the second time window, an average value of measurement results obtained from all measurements meets the second measurement event; in the second time window, measurement results obtained from at least N measurements all meet the second measurement event; measurement results obtained from N consecutive measurements all meet the second measurement event; measurement results obtained from at least M measurements in the measurement results obtained from the N consecutive measurements all meet the second measurement event; and an average value of the measurement results obtained from the N consecutive measurements meets the second measurement event.

In an optional embodiment, the first configuration information includes one or more of the following: the first time window, the second time window, a measurement interval between N measurements, a measurement interval between M measurements, and a measurement interval between adjacent measurements.

In an optional embodiment, the result processing configuration information further includes one or more of the following: a cell identifier, a quantity of measured beams, the measurement object related to the CSI and/or the SSB, a measurement type, and an L1 measurement interval.

In an optional embodiment, the measurement type includes one or more of the following: RSRP, RSRQ, and an SINR.

In an optional embodiment, the processing module 1202 is specifically configured to: add or change to the candidate PScell if the measurement result of the candidate PScell meets the first decision condition.

In an optional embodiment, the processing module 1202 is specifically configured to: send fourth information if the measurement result of the candidate PScell meets the first decision condition, where the fourth information is used to report the measurement result of the candidate PScell; obtain fifth information, where the fifth information indicates to add or change to the candidate PScell; and add or change to the candidate PScell.

In an optional embodiment, the processing module 1202 is specifically configured to: send sixth information if the measurement result of the candidate PScell meets the first decision condition, where the sixth information is used to request RRC reconfiguration of the candidate PScell; obtain seventh information, where the seventh information indicates that the RRC reconfiguration is completed; and establish an RRC connection with a candidate SN in which the candidate PScell is located.

In an optional embodiment, the processing module 1202 is specifically configured to: perform UL/DL synchronization on the candidate PScell in advance based on the third configuration information if the measurement result of the candidate PScell meets the second decision condition, to obtain synchronization information; and perform candidate PScell addition or change based on the synchronization information if it is determined to perform the candidate PScell addition or change.

In an optional embodiment, the processing module 1202 is specifically configured to: send second information, where the second information is used to request to perform UL/DL synchronization on the candidate PScell in advance; and obtaining third information, where the third information indicates a PSS, an SSS, and PBCH information corresponding to the candidate PScell, and the PSS, SSS, and PBCH information are used for DL synchronization; or the third information indicates TA timing information corresponding to the candidate PScell, and the TA timing information is used for UL synchronization.

In an optional embodiment, when the third information indicates the TA timing information, the second information is used to initiate a PRACH access of the candidate PScell. Alternatively, when the third information indicates the PSS, the SSS, and the PBCH information, the second information is used to request to read an SSB of the candidate PScell.

In an optional embodiment, the first configuration information further includes PUCCH configuration information indicating PRACH-free access corresponding to the candidate PScell. The processing module 1202 is specifically configured to: determine validity of the TA timing information; and if the TA timing information is valid, communicate with the candidate SN in which the candidate PScell is located based on the PUCCH configuration information; or if the TA timing information is invalid, initiate a PRACH access to the candidate SN.

The terminal device provided in this embodiment is configured to implement the technical solutions of the terminal device in the foregoing method embodiments. Implementation principles and technical effects thereof are similar. Details are not described herein again.

It should be noted that all module names involved in embodiments of this application may be defined as other names, provided that functions of the modules can be implemented. The module names are not specifically limited.

FIG. 13 is a diagram of a structure of an electronic device according to an embodiment of this application. As shown in FIG. 13, the electronic device 1300 includes: at least one processor 1301, a memory 1302, a communication interface 1303, and a system bus 1304. The memory 1302 and the communication interface 1303 are connected to the processor 1301 via the system bus 1304, and communicate with each other. The memory 1302 is configured to store instructions, and the communication interface 1303 is configured to communicate with another device. The processor 1301 is configured to invoke instructions in the memory to perform steps in the method provided in the foregoing method embodiments. Specific implementations and technical effects are similar, and details are not described herein again.

The system bus 1304 in FIG. 13 may be a peripheral component interconnect (peripheral component interconnect, PCI) bus, an extended industry standard architecture (extended industry standard architecture, EISA) bus, or the like. The system bus 1304 may be classified into an address bus, a data bus, a control bus, and the like. For ease of representation, only one thick line is used to represent the system bus in the figure, but this does not mean that there is only one bus or only one type of bus.

The communication interface 1303 is configured to implement communication between a database access apparatus and another device (such as a client, a read/write database, or a read-only database).

The memory 1302 may include a random access memory (random access memory, RAM), and may further include a non-volatile memory (non-volatile memory), for example, at least one magnetic disk storage.

The processor 1301 may be a general purpose processor, and includes a central processing unit, a network processor (network processor, NP), a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, or a discrete hardware component.

An embodiment of this application further provides a computer-readable storage medium. The computer-readable storage medium stores a computer program, and when executed by a processor, the computer program is used to implement the steps in the method in the foregoing method embodiments. All or some of the methods described in the foregoing embodiments may be implemented by using software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is used to carry or store required program code in a form of instruction or data structure, and may be accessed by the computer. In addition, any connection is appropriately referred to as a computer-readable medium. For example, if a coaxial cable, an optical fiber cable, a twisted pair, a digital subscriber line (Digital Subscriber Line, DSL), or a wireless technology (like infrared, radio, and a microwave) is used to transmit software from a website, a server, or another remote source, the coaxial cable, the optical fiber cable, the twisted pair, the DSL, or the wireless technology such as infrared, radio, and a microwave is included in a definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combinations should also be included in the scope of the computer-readable medium.

An embodiment of this application further provides a computer program product, where the computer program product includes a computer program. When the computer program is run, a computer is enabled to perform the steps in the method in the foregoing method embodiments.

An embodiment of this application further provides a chip system, including at least one processor and a communication interface. The communication interface and the at least one processor are interconnected via a line, and the at least one processor is configured to run a computer program or instructions, to perform the steps in the method in the foregoing method embodiments.

It should be noted that user information (including but not limited to user equipment information, user personal information, and the like) and data (including but not limited to data used for analysis, stored data, displayed data, and the like) in the embodiments of this application are all information and data that are authorized by the user or that are fully authorized by each party. In addition, collection, use, and processing of the related data need to comply with relevant laws, regulations, and standards of related countries and regions, and a corresponding operation entry is provided for the user to choose to authorize or reject.

Embodiments of this application are described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention should fall within the protection scope of the present invention.

## Claims

1. A primary secondary cell adjustment method, comprising:
indicating first information, wherein the first information indicates first configuration information corresponding to a candidate primary secondary cell PScell, the first configuration information is used for conditional PScell addition or change, and the first configuration information comprises second configuration information for L1 measurement and/or third configuration information for performing uplink UL/downlink DL synchronization in advance.

2. The method according to claim 1, wherein the second configuration information comprises:
resource configuration information for the L1 measurement and/or result processing configuration information for L1 measurement result processing, wherein the resource configuration information comprises time-frequency resource information of a measurement object related to channel state information CSI and/or a synchronization signal block SSB.

3. The method according to claim 2, wherein the result processing configuration information comprises:
a first decision condition and a first measurement event for determining the first decision condition, wherein the first decision condition is used to trigger measurement result reporting of the L1 measurement and/or addition or change of the candidate PScell; and/or
a second decision condition and a second measurement event for determining the second decision condition, wherein the second decision condition is used to trigger performing the UL/DL synchronization in advance.

4. The method according to claim 3, wherein the first measurement event comprises one or more of the following:
a measurement result of the candidate PScell is greater than a first absolute value;
a difference between the measurement result of the candidate PScell and a first threshold is greater than a measurement result of a source primary cell PCell, and/or the difference between the measurement result of the candidate PScell and the first threshold is greater than a measurement result of a source PScell; and
the measurement result of the source Pcell and/or the measurement result of the source PScell are/is less than a first limit value, and the measurement result of the candidate PScell is greater than a second limit value; and/or
the second measurement event comprises one or more of the following:
the measurement result of the candidate PScell is greater than a second absolute value;
a difference between the measurement result of the candidate PScell and a second threshold is greater than the measurement result of the source Pcell, and/or the difference between the measurement result of the candidate PScell and the second threshold is greater than the measurement result of the source PScell; and
the measurement result of the source Pcell and/or the measurement result of the source PScell are/is less than a third limit value, and the measurement result of the candidate PScell is greater than a fourth limit value.

5. The method according to claim 3 or 4, wherein the first decision condition comprises one or more of the following:
in a first time window, a measurement result obtained from each measurement meets the first measurement event;
in the first time window, an average value of measurement results obtained from all measurements meets the first measurement event;
in the first time window, measurement results obtained from at least N measurements meet the first measurement event;
measurement results obtained from N consecutive measurements all meet the first measurement event;
measurement results obtained from at least M measurements in the measurement results obtained from the N consecutive measurements meet the first measurement event; and
an average value of the measurement results obtained from the N consecutive measurements meets the first measurement event; and/or
the second decision condition comprises one or more of the following:
in a second time window, a measurement result obtained from each measurement meets the second measurement event;
in the second time window, an average value of all measurement results meets the second measurement event;
in the second time window, measurement results obtained from at least N measurements meet the second measurement event;
measurement results obtained from N consecutive measurements all meet the second measurement event;
measurement results obtained from at least M measurements in the measurement results obtained from the N consecutive measurements meet the second measurement event; and
an average value of the measurement results obtained from the N consecutive measurements meets the second measurement event.

6. The method according to claim 5, wherein the first configuration information comprises one or more of the following: the first time window, the second time window, a measurement interval between N measurements, a measurement interval between M measurements, and a measurement interval between adjacent measurements.

7. The method according to any one of claims 3 to 6, wherein the result processing configuration information further comprises one or more of the following: a cell identifier, a quantity of measured beams, the measurement object related to the CSI and/or the SSB, a measurement type, and an L1 measurement interval.

8. The method according to claim 7, wherein the measurement type comprises one or more of the following: reference signal received power RSRP, reference signal received quality RSRQ, and a signal to interference plus noise ratio SINR.

9. The method according to any one of claims 1 to 8, further comprising:
obtaining second information, wherein the second information is used to request to perform the UL/DL synchronization on the candidate PScell in advance; and
indicating third information, wherein the third information indicates a primary synchronization signal PSS, a secondary synchronization signal SSS, and physical broadcast channel PBCH information that correspond to the candidate PScell, and the PSS, the SSS, and the PBCH information are used for DL synchronization; and/or the third information indicates timing advance TA timing information corresponding to the candidate PScell, and the TA timing information is used for UL synchronization.

10. The method according to claim 9, wherein when the third information indicates the TA timing information, the second information is used to initiate a physical random access channel PRACH access of the candidate PScell; or
when the third information indicates the PSS, the SSS, and the PBCH information, the second information is used to request to read an SSB of the candidate PScell.

11. A primary secondary cell adjustment method, comprising:
obtaining first information, wherein the first information indicates first configuration information corresponding to a candidate PScell, and the first configuration information comprises second configuration information for L1 measurement and/or third configuration information for performing UL/DL synchronization in advance; and
performing a conditional PScell addition or change on the candidate PScell based on the first configuration information.

12. The method according to claim 11, wherein the second configuration information comprises:
resource configuration information for the L1 measurement and/or result processing configuration information for an L1 measurement result, wherein the resource configuration information comprises time-frequency resource information of a measurement object related to CSI and/or an SSB.

13. The method according to claim 12, wherein the result processing configuration information comprises:
a first decision condition and a first measurement event for determining the first decision condition, wherein the first decision condition is used to trigger measurement result reporting of the L1 measurement and/or addition or change of the candidate PScell; and/or
a second decision condition and a second measurement event for determining the second decision condition, wherein the second decision condition is used to trigger performing the UL/DL synchronization in advance.

14. The method according to claim 13, wherein the first measurement event comprises one or more of the following:
a measurement result of the candidate PScell is greater than a first absolute value;
a difference between the measurement result of the candidate PScell and a first threshold is greater than a measurement result of a source Pcell, and/or the difference between the measurement result of the candidate PScell and the first threshold is greater than a measurement result of a source PScell; and
the measurement result of the source Pcell and/or the measurement result of the source PScell are/is less than a first limit value, and the measurement result of the candidate PScell is greater than a second limit value; and/or
the second measurement event comprises one or more of the following:
the measurement result of the candidate PScell is greater than a second absolute value;
a difference between the measurement result of the candidate PScell and a second threshold is greater than the measurement result of the source Pcell, and/or the difference between the measurement result of the candidate PScell and the second threshold is greater than the measurement result of the source PScell; and
the measurement result of the source Pcell and/or the measurement result of the source PScell are/is less than a third limit value, and the measurement result of the candidate PScell is greater than a fourth limit value.

15. The method according to claim 13 or 14, wherein the first decision condition comprises one or more of the following:
in a first time window, a measurement result obtained from each measurement meets the first measurement event; and in the first time window, an average value of measurement results obtained from all measurements meets the first measurement event;
in the first time window, measurement results obtained from at least N measurements meet the first measurement event;
measurement results obtained from N consecutive measurements all meet the first measurement event;
measurement results obtained from at least M measurements in the measurement results obtained from the N consecutive measurements meet the first measurement event; and
an average value of the measurement results obtained from the N consecutive measurements meets the first measurement event; and/or
the second decision condition comprises one or more of the following:
in a second time window, a measurement result obtained from each measurement meets the second measurement event;
in the second time window, an average value of all measurement results meets the second measurement event;
in the second time window, measurement results obtained from at least N measurements meet the second measurement event;
measurement results obtained from N consecutive measurements all meet the second measurement event;
measurement results obtained from at least M measurements in the measurement results obtained from the N consecutive measurements meet the second measurement event; and
an average value of the measurement results obtained from the N consecutive measurements meets the second measurement event.

16. The method according to claim 15, wherein the first configuration information comprises one or more of the following: the first time window, the second time window, a measurement interval between N measurements, a measurement interval between M measurements, and a measurement interval between adjacent measurements.

17. The method according to any one of claims 13 to 16, wherein the result processing configuration information further comprises one or more of the following: a cell identifier, a quantity of measured beams, the measurement object related to the CSI/SSB, a measurement type, and an L1 measurement interval.

18. The method according to claim 17, wherein the measurement type comprises one or more of the following: RSRP, RSRQ, and an SINR.

19. The method according to any one of claims 13 to 18, wherein performing the conditional PScell addition or change on the candidate PScell based on the first configuration information comprises:
adding or changing to the candidate PScell if the measurement result of the candidate PScell meets the first decision condition.

20. The method according to claim 19, wherein adding or changing to the candidate PScell if the measurement result of the candidate PScell meets the first decision condition comprises:
sending fourth information if the measurement result of the candidate PScell meets the first decision condition, wherein the fourth information is used to report the measurement result of the candidate PScell;
obtaining fifth information, wherein the fifth information indicates to add or change to the candidate PScell; and
adding or changing to the candidate PScell.

21. The method according to claim 19, wherein adding or changing to the candidate PScell if the measurement result of the candidate PScell meets the first decision condition comprises:
performing random access to the candidate PScell if the measurement result of the candidate PScell meets the first decision condition.

22. The method according to any one of claims 13 to 21, wherein performing the conditional PScell addition or change on the candidate PScell based on the first configuration information comprises:
performing the UL/DL synchronization on the candidate PScell in advance based on the third configuration information if the measurement result of the candidate PScell meets the second decision condition, to obtain the synchronization information; and
performing the candidate PScell addition or change based on the synchronization information if it is determined to perform the candidate PScell addition or change.

23. The method according to claim 22, wherein performing the UL/DL synchronization on the candidate PScell in advance, to obtain the synchronization information comprises:
sending second information, wherein the second information is used to request to perform the UL/DL synchronization on the candidate PScell in advance; and
obtaining third information, wherein the third information indicates a PSS, an SSS, and PBCH information that correspond the candidate PScell, the PSS, the SSS, and the PBCH information are used for DL synchronization; and/or the third information indicates TA timing information corresponding to the candidate PScell, and the TA timing information is used for UL synchronization.

24. The method according to claim 23, wherein when the third information indicates the TA timing information, the second information is used to initiate a PRACH access of the candidate PScell; or
when the third information indicates the PSS, the SSS, and the PBCH information, the second information is used to request to read an SSB of the candidate PScell.

25. The method according to any one of claims 22 to 24, wherein the first configuration information further comprises physical uplink control channel PUCCH configuration information for PRACH-free access corresponding to the candidate PScell, and performing the candidate PScell addition or change based on the synchronization information comprises:
determining validity of the TA timing information; and
if the TA timing information is valid, communicating with a candidate SN in which the candidate PScell cell is located based on the PUCCH configuration information; or if the TA timing information is invalid, initiating a PRACH access to the candidate SN.

26. An electronic device, comprising a processor and a memory, wherein
the memory stores computer-executable instructions; and
the processor executes the computer-executable instructions stored in the memory, so that the electronic device performs the method according to any one of claims 1 to 10, or the electronic device to perform the method according to any one of claims 11 to 25.

27. A computer-readable storage medium, wherein the computer-readable storage medium stores a computer program, and when the computer program is executed by a processor, the method according to any one of claims 1 to 10 is implemented; or when the computer program is executed by the processor, the method according to any one of claims 11 to 25 is implemented.

28. A chip system, comprising at least one processor and a communication interface, wherein the communication interface and the at least one processor are interconnected via a line, and the at least one processor is configured to run a computer program or instructions, to perform the method according to any one of claims 1 to 10, or to perform the method according to any one of claims 11 to 25.

29. A computer program product, comprising a computer program, wherein when the computer program is run, a computer is enabled to perform the method according to any one of claims 1 to 10, or the computer is enabled to perform the method according to any one of claims 11 to 25.
